# EUROPEAN PATENT APPLICATION

(11) **EP 4 752 174 A1**
(43) Date of publication of application: **03.06.2026**
(21) Application number: 24845640.2
(22) Date of filing: 24.07.2024
(51) Int. Cl.: C08L 53/02, B32B 15/085, B32B 27/00, B32B 27/30, B32B 27/32, C08F 297/04, C08J 5/18, C08K 5/13, C08K 5/49, C08L 23/10, C08L 23/26

(54) **ELASTOMER RESIN COMPOSITION, FILM, LAMINATE, AND MOLDED BODY**

(30) Priority: 25.07.2023 JP 2023120616; 09.02.2024 JP 2024018382
(71) Applicant: Kuraray Co., Ltd., Kurashiki-shi, Okayama 710-0801 (JP)
(72) Inventor: KIKUKAWA, Yusuke, Tainai-shi, Niigata 959-2691 (JP); KODERA, Jumpei, Tainai-shi, Niigata 959-2691 (JP); ASAI, Kento, Tainai-shi, Niigata 959-2691 (JP)
(74) Representative: Müller-Boré & Partner Patentanwälte PartG mbB
(86) International application number: PCT/JP2024/026394
(87) International publication number: WO 2025/023265

(57) **Abstract**

The present disclosure provides an elastomer resin composition having an excellent process passing property, an excellent film forming property, an excellent adhesive property for various materials, and excellent chipping resistance. An elastomer resin composition according to the present disclosure contains at least one of thermoplastic elastomers (EX) to (EZ), and at least one of polypropylene-based polymers (PX) and (PY). (EX) It has a St unit-containing block, and a conjugated diene compound unit-containing block in which the total amount of 1,2- and 3,4-bonds is less than 40 mol%. (EY) It has a St unit-containing block, and a conjugated diene compound unit-containing block in which the total amount of 1,2- and 3,4-bonds is 40 mol% or more. (EZ) It has an αMSt unit-containing block, and a conjugated diene compound unit-containing block in which the total amount of 1,2- and 3,4-bonds is 40 mol% or more. (PX) It does not have a polar group and has a melt tension of 2.5×10⁻² N or larger. (PY) It has a polar group and has a melting point of 130°C or lower.

## Description

### Technical Field

The present disclosure relates to an elastomer resin composition, a film, a laminate, and a molded article.

### Background Art

There are cases where, for the purpose of surface protection, decoration, and the like, a coating is formed on the surface of an exterior member of a vehicle by applying a paint thereto and drying the applied paint by a spray coating method or the like. Regarding coatings for such uses, there are cases where the coating s partially damaged and/or becomes defective due to the collision of small particles such as pebbles and snow-melting salt, and as a result, the underlayer is partially exposed and hence the desired function cannot be obtained. In this specification, damages and defects as described above are collectively referred to as "chipping", and the resistance to such damages and defects is referred to as "chipping resistance".

Among exterior members of vehicles, chippings tends to occur in bumpers, so that their coatings are required to have higher chipping resistance. Conventionally, polypropylene-based polymers are widely used as materials for bumpers of vehicle because of their characteristics such as high impact resistance, low specific gravity, and low material costs. However, in general, polypropylene-based polymers, which are generally nonpolar, tend to repel paints, and in addition, it is difficult to form a coating with a satisfactory adhesive property. The decrease in the adhesive property of the coating leads to a decrease in chipping resistance, and hence is not desirable.

Further, the method using a paint requires a long and large drying furnace and a large amount of energy, and is expensive.

Decorative films have been proposed as materials which can be used as an alternative to paints and with which the above-described problem can be solved.

Examples of technologies related to the present disclosure include Patent Literatures 1 to 3.

Each of Patent Literatures 1 and 2 discloses an elastomer resin composition containing: a thermoplastic elastomer which is a block copolymer having a polymer block containing an aromatic vinyl compound unit and a polymer block containing a conjugated diene compound unit, or a hydrogenated product thereof; and a polar group-containing polypropylene-based polymer (Claim 1 of Patent Literature 1 and Claim 1 of Patent Literature 2).

Patent Literature 3 discloses an elastomer resin composition containing: a thermoplastic elastomer which is a block copolymer having a polymer block containing an aromatic vinyl compound unit and a polymer block containing a conjugated diene compound unit, or a hydrogenated product thereof; a polypropylene-based polymer having a specific uniaxial elongational viscosity characteristic; and more preferably a polar group-containing polypropylene-based polymer (Claims 1, 4 and 5, and paragraph 0033).

### Citation List

### Patent Literature

Patent Literature 1: International Patent Publication No. WO2013/105392
Patent Literature 2: International Patent Publication No. WO2016/031550
Patent Literature 3: International Patent Publication No. WO2020/179923

### Summary of Invention

### Technical Problem

The elastomer resin compositions disclosed in Patent Literatures 1 and 2 can have an excellent adhesive property for various materials such as metals and resins, and excellent flexibility. The elastomer resin composition disclosed in Patent Literature 1 can also have excellent insert moldability. However, when the elastomer resin compositions disclosed in these literatures are extruded into a film, there is a case that neck-in, i.e., a phenomenon in which the width of the film becomes narrower than the width of the T-die due to insufficient melt tension, occurs.

Regarding the elastomer resin composition disclosed in Patent Literature 3, it is possible to prevent neck-in from occurring during the extrusion molding without reducing the adhesive property by adding a polypropylene-based polymer having a specific uniaxial elongational viscosity characteristic (e.g., a polypropylene-based polymer having a long-chain branched structure) (paragraph 0010).

However, according to the research of the inventors of the present application, it has been found that the elastomer resin compositions disclosed in Patent Literatures 1 to 3 have relatively high tackiness, so that there are cases in which the film cannot be easily separated from the cooling rolls or the conveyance rolls in the film forming process, and hence the process passing property is not satisfactory.

Patent Literatures 1 to 3 also do not mention chipping resistance, and do not disclose a suitable composition as a material for a decorative film.

The present disclosure has been made in view of the above-described circumstances, and an object thereof is to provide an elastomer resin composition having an excellent process passing property, an excellent film forming property, an excellent adhesive property for various materials such as metals and resins, and excellent chipping resistance.

### Solution to Problem

The present disclosure provides films, laminates, and molded articles described in below-shown Items [1] to [16].
[1] An elastomer resin composition containing a thermoplastic elastomer (E) and a polypropylene-based polymer (P), and satisfying below-shown Conditions 1 to 3,
   (Condition 1) The thermoplastic elastomer (E) contains:
      at least one type of first thermoplastic elastomer (EX) selected from the group consisting of a block copolymer and a hydrogenated product of the block copolymer, the block copolymer containing a polymer block (xa) containing a styrene unit, and a polymer block (xb) containing a conjugated diene compound unit, and a total amount of a 1,2-bond and a 3,4-bond of the conjugated diene compound unit being less than 40 mol%;
      at least one type of second thermoplastic elastomer (EY) selected from the group consisting of a block copolymer and a hydrogenated product of the block copolymer, the block copolymer containing a polymer block (ya) containing a styrene unit, and a polymer block (yb) containing a conjugated diene compound unit, and a total amount of a 1,2-bond and a 3,4-bond of the conjugated diene compound unit being 40 mol% or more; and
      at least one type of third thermoplastic elastomer (EZ) selected from the group consisting of a block copolymer and a hydrogenated product of the block copolymer, the block copolymer containing a polymer block (za) containing an α-methylstyrene unit and a polymer block (zb) containing a conjugated diene compound unit, and a total amount of a 1,2-bond and a 3,4-bond of the conjugated diene compound unit being 40 mol% or more,
   (Condition 2) the polypropylene-based polymer (P) contains a first polypropylene-based polymer (PX) containing no polar group and having a melt tension of 2.5×10⁻² N or larger as measured at 230°C and at a haul-off speed of 4.0 m/min, and a second polypropylene-based polymer (PY) containing a polar group and having a melting point of 130°C or lower, and
   (Condition 3) based on a total amount of 100 pts.mass of the thermoplastic elastomer (E), a content of the first thermoplastic elastomer (EX) is 15 to 55 pts.mass; a content of the second thermoplastic elastomer (EY) is 25 to 65 pts.mass; a content of the third thermoplastic elastomer (EZ) is 15 to 35 pts.mass; a content of the first polypropylene-based polymer (PX) is 3 to 15 pts.mass; and a content of the second polypropylene-based polymer (PY) is 7.5 to 20 pts.mass.
[2] The elastomer resin composition described in Item [1], in which a melt tension of the first polypropylene-based polymer (PX) measured at 230°C and at a haul-off speed of 4.0 m/min is 50×10⁻² N or smaller.
[3] The elastomer resin composition described in Item [1] or [2], in which a melting point of the second polypropylene-based polymer (PY) is 100°C or higher.
[4] The elastomer resin composition described in any one of Items [1] to [3], further containing a plurality of types of antioxidants (AO) including a phenolic antioxidant (AO-F) and a phosphoric antioxidant (AO-P), in which
   based on a total of 100 pts.mass of the thermoplastic elastomer (E) and the polypropylene-based polymer (P), a content of the phenolic antioxidant (AO-F) is 0.10 to 5.00 pts.mass, and a content of the phosphoric antioxidant (AO-P) is 0.01 to 5.00.
[5] A film including a layer made of an elastomer resin composition described in any one of Items [1] to [4].
[6] The film described in Item [5], further including a (meth)acrylic resin-containing layer.
[7] The film described in Item [6], in which the (meth)acrylic resin-containing layer contains a (meth)acrylic resin, and at least one type of rubber component selected from the group consisting of acrylic rubber particles and an acrylic block copolymer.
[8] The film described in any one of Items [5] to [7], further including a metal layer.
[9] The film described in any one of Items [5] to [7], further including a decorative layer.
[10] A laminate including a layer made of an elastomer resin composition described in any one of Items [1] to [4].
[11] A molded article including a layer or a member made of an elastomer resin composition described in any one of Items [1] to [4].
[12] The molded article described in Item [11], including, on at least a part of a surface of an adherend, a layer made of the elastomer resin composition and a metal layer in a successive manner.
[13] The molded article described in Item [12], further including a (meth)acrylic resin-containing layer above the metal layer.
[14] The molded article described in Item [11], including, on at least a part of a surface of an adherend, a layer made of the elastomer resin composition and a decorative layer in a successive manner.
[15] The molded article described in Item [14], further including a (meth)acrylic resin-containing layer above the decorative layer.
[16] The molded article described in Item [13] or [15], in which the (meth)acrylic resin-containing layer contains a (meth)acrylic resin, and at least one type of rubber component selected from the group consisting of acrylic rubber particles and an acrylic block copolymer.

### Advantageous Effects of Invention

According to the present disclosure, it is possible to provide an elastomer resin composition having an excellent process passing property, an excellent film forming property, an excellent adhesive property for various materials such as metals and resins, and excellent chipping resistance.

### Brief Description of Drawings

Fig. 1 is a schematic cross-sectional diagram showing a film according to an embodiment of the present invention;
Fig. 2 is a schematic cross-sectional diagram showing an example of a film including a metal layer;
Fig. 3 is a schematic cross-sectional diagram showing a decorative film according to an embodiment of the present invention; and
Fig. 4 is a schematic cross-sectional diagram showing a decorated molded article according to an embodiment of the present invention.

### Description of Embodiments

In general, the terms "film", "sheet", or "plate" are used for thin-film molded articles depending on the thickness, but there are no clear definitions of them, and there is no clear distinction among them. The term "film" used in this specification includes "sheet".

In this specification, (meth)acryl is a generic term for acryl and methacryl, and the same applies to (meth)acrylonitrile and the like.

In this specification, the term "viscous-adhesive" is a generic term for pressure-sensitive adhesive and adhesive.

In this specification, unless otherwise specified, the weight-average molecular weight (Mw) of a (meth)acrylic resin is a weight-average molecular weight (Mw) in terms of standard polymethyl methacrylate (PMMA) determined by gel permeation chromatography (GPC). The same applies to the number-average molecular weight (Mn).

In this specification, unless otherwise specified, the weight-average molecular weight (Mw) of a resin other than the (meth)acrylic resin (such as a thermoplastic elastomer (E)) is a weight-average molecular weight (Mw) in terms of standard polystyrene determined by gel permeation chromatography (GPC). The same applies to the number-average molecular weight (Mn).

### [Elastomer Resin Composition]

An elastomer resin composition according to the present disclosure contains a thermoplastic elastomer (E) and a polypropylene-based polymer (P), and satisfies below-shown Conditions 1 to 3.

### (Condition 1)

The thermoplastic elastomer (E) contains:
at least one type of first thermoplastic elastomer (EX) selected from the group consisting of a block copolymer and a hydrogenated product of the block copolymer, the block copolymer containing a polymer block (xa) containing a styrene unit (St), and a polymer block (xb) containing a conjugated diene compound unit, and a total amount of a 1,2-bond and a 3,4-bond of the conjugated diene compound unit being less than 40 mol%;
at least one type of second thermoplastic elastomer (EY) selected from the group consisting of a block copolymer and a hydrogenated product of the block copolymer, the block copolymer containing a polymer block (ya) containing a styrene (St) unit, and a polymer block (yb) containing a conjugated diene compound unit, and a total amount of a 1,2-bond and a 3,4-bond of the conjugated diene compound unit being 40 mol% or more; and
at least one type of third thermoplastic elastomer (EZ) selected from the group consisting of a block copolymer and a hydrogenated product of the block copolymer, the block copolymer containing a polymer block (za) containing an α-methylstyrene (αMSt) unit and a polymer block (zb) containing a conjugated diene compound unit, and a total amount of a 1,2-bond and a 3,4-bond of the conjugated diene compound unit being 40 mol% or more.

### (Condition 2)

the polypropylene-based polymer (P) contains a first polypropylene-based polymer (PX) containing no polar group and having a melt tension of 2.5×10⁻² N or larger as measured at 230°C and at a haul-off speed of 4.0 m/min, and a second polypropylene-based polymer (PY) containing a polar group and having a melting point of 130°C or lower.

### (Condition 3)

based on a total amount of 100 pts.mass of the thermoplastic elastomer (E), a content of the first thermoplastic elastomer (EX) is 15 to 55 pts.mass; a content of the second thermoplastic elastomer (EY) is 25 to 65 pts.mass; a content of the third thermoplastic elastomer (EZ) is 15 to 35 pts.mass; a content of the first polypropylene-based polymer (PX) is 3 to 15 pts.mass; and a content of the second polypropylene-based polymer (PY) is 7.5 to 20 pts.mass.

### (First Thermoplastic Elastomer (EX))

The elastomer resin composition according to the present disclosure contains at least one type of first thermoplastic elastomer (EX) selected from the group consisting of a block copolymer and a hydrogenated product of the block copolymer, the block copolymer containing a polymer block (xa) containing a styrene unit (St), and a polymer block (xb) containing a conjugated diene compound unit, and a total amount of a 1,2-bond and a 3,4-bond of the conjugated diene compound unit being less than 40 mol%.

The first thermoplastic elastomer (EX) is one of the matrix components of the elastomer resin composition, and can impart excellent flexibility and excellent impact resistance to the elastomer resin composition. The first thermoplastic elastomer (EX) can impart, by containing a polymer block (xb) containing a conjugated diene compound unit in which the total amount of a 1,2-bond and a 3,4-bond is less than 40 mol% therein, excellent chipping resistance to the elastomer resin composition.

### <Polymer Block (xa)>

The first thermoplastic elastomer (EX) contains at least one polymer block (xa) containing a styrene (St) unit.

The polymer block (xa) may contain at least one type of aromatic vinyl compound unit other than the styrene (St) unit. Examples of aromatic vinyl compounds other than the styrene (St) include α-methylstyrene (αMSt), 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl) styrene, 1-vinylnaphthalene, and 2-vinylnaphthalene.

The polymer block (xa) may contain at least one type of monomer unit other than the aromatic vinyl compound unit. Examples of monomers other than the aromatic vinyl compound include 1-butene, pentene, hexene, butadiene, isoprene, and methyl vinyl ether.

The content of the styrene (St) unit in the polymer block (xa) is not limited to any particular values, and is preferably 80 to 100 mass%. The lower limit value is more preferably 90 mass%, and is particularly preferably 95 mass%.

The content of the at least one type of aromatic vinyl compound unit containing a styrene (St) unit (the total amount in the case of a plurality of types) in the polymer block (xa) is not limited to any particular values, and is preferably 80 to 100 mass%. The lower limit value is more preferably 90 mass%, and particularly preferably 95 mass%.

The content of the monomer unit other than the aromatic vinyl compound unit (the total amount in the case of a plurality of types) in the polymer block (xa) is not limited to any particular values, and is 20 to 0 mass%. The upper limit value is more preferably 10 mass%, and particularly preferably 5 mass%.

### <Polymer Block (xb)>

The first thermoplastic elastomer (EX) contains at least one polymer block (xb) containing at least one type of conjugated diene compound unit. The total amount of the 1,2- and 3,4-bonds of the at least one type of conjugated diene compound unit contained in the first thermoplastic elastomer (EX) is less than 40 mol%. Note that when the first thermoplastic elastomer (EX) contains a plurality of polymer blocks (xb), the total amount of the 1,2- and 3,4-bonds of the at least one type of conjugated diene compound unit contained in the whole polymer blocks (xb) is less than 40 mol%.

Examples of conjugated diene compounds include butadiene, isoprene, 2,3-dimethyl-1,3-butadiene, 1,3-pentadiene, and 1,3-hexadiene. The polymer block (xb) preferably contains a butadiene unit and/or an isoprene unit as the conjugated diene compound unit, and preferably consists of a butadiene unit and/or an isoprene unit.

The polymer block (xb) may contain at least one type of monomer unit other than the conjugated diene compound unit. Examples of monomers other than the conjugated diene compound include styrene (St) and 4-methylstyrene.

The content of the conjugated diene compound unit (the total amount in the case of a plurality of types) in the polymer block (xb) is not limited to any particular values, and is preferably 80 to 100 mass%. The lower limit value is more preferably 90 mass%, and particularly preferably 95 mass%.

The content of monomer units other than the conjugated diene compound unit (the total amount in the case of a plurality of types) in the polymer block (xb) is not limited to any particular values, and is 20 to 0 mass%. The upper limit value is more preferably 10 mass%, and particularly preferably 5 mass%.

Regarding the bonding form of the conjugated diene compound unit in the polymer block (xb), the butadiene unit can be in the form of a 1,2-bond or a 1, 4-bond, and the isoprene unit can be in the form of a 1,2-bond, a 3,4-bond, or a 1, 4-bond. The same applies to the polymer blocks (yb) and (zb).

The total amount of the 1,2- and 3,4-bonds in the polymer block (xb) is less than 40 mol%, and preferably 39 mol% or less in view of the chipping resistance. The upper limit value is more preferably 35 mol%, still more preferably 30 mol%, still more preferably 25 mol%, still more preferably 20 mol%, particularly preferably 15 mol%, and most preferably 10 mol%. The lower limit value is 0 mol%.

The total amount of the 1,2- and 3,4-bonds in the conjugated diene compound units in the polymer block containing the conjugated diene compound unit can be calculated by ¹H-NMR measurement. Specifically, it can be calculated from a ratio of the integral value of a first peak present at 4.2 to 5.0 ppm originating from the conjugated diene compound unit of the 1,2- and 3,4-bonds to the integral value of a second peak present at 5.0 to 5.45 ppm originating from the conjugated diene compound unit of the 1,4-bond.

The bonding form between the polymer blocks (xa) and (xb) is not limited to any particular forms. Examples of forms include straight chain bonding, branched chain bonding, radial bonding, and combinations thereof; and straight chain bonding is preferred. Examples of straight-chain bonding forms include diblock copolymers expressed as xa-xb, triblock copolymers expressed as xa-xb-xa or xb-xa-xb, tetrablock copolymers expressed as xa-xb-xa-xb, pentablock copolymers expressed as xa-xb-xa-xb-xa or xb-xa-xb-xa-xb, (xa-xb)ₙ X-type copolymers (X represents a coupling residue and n represents an integer equal to greater than 2), and combinations thereof. Among them, the triblock copolymer is preferred, and the triblock copolymer expressed as xa-xb-xa is more preferred.

The content of the polymer block (xa) in the first thermoplastic elastomer (EX) is not limited to any particular values, and is preferably 5 to 75 mass% in view of the flexibility and the mechanical characteristics of the first thermoplastic elastomer (EX). The lower limit value is more preferably 10 mass%. The upper limit value is more preferably 70 mass%, still more preferably 65 mass%, still more preferably 60 mass%, still more preferably 55 mass%, still more preferably 50 mass%, particularly preferably by 45 mass%, and most preferably 40 mass%.

The content of the polymer block (xb) in the first thermoplastic elastomer (EX) is not limited to any particular values, and is preferably 95 to 25 mass% in view of the flexibility and the mechanical characteristics of the first thermoplastic elastomer (EX). The upper limit value is more preferably 90 mass%. The lower limit value is more preferably 30 mass%, still more preferably 35 mass%, still more preferably 40 mass%, still more preferably 45 mass%, still more preferably 50 mass%, particularly preferably 55 mass%, and most preferably 60 mass%.

The total content of the polymer blocks (xa) and (xb) in the first thermoplastic elastomer (EX) is not limited to any particular values, and is preferably 95 to 100 mass%. The lower limit value is more preferably 97 mass%, particularly preferably 98 mass%, and most preferably 99 mass%.

The first thermoplastic elastomer (EX) may be an un-hydrogenated block copolymer containing at least one polymer block (xa) and at least one polymer block (xb), or a hydrogenated product thereof.

The method for manufacturing an un-hydrogenated block copolymer is not limited to any particular methods, and examples include an anionic polymerization method. Examples include (i) a method for successively polymerizing at least one type of aromatic vinyl compound containing styrene (St) using an alkyllithium compound as an initiator, then, successively polymerizing at least one type of conjugated diene compound, and, when required, successively polymerizing at least one type of aromatic vinyl compound containing styrene (St); (ii) a method for successively polymerizing at least one type of aromatic vinyl compound containing styrene (St) using an alkyllithium compound as an initiator, then, successively polymerizing at least one type of conjugated diene compound, and coupling them by adding a coupling agent; and (iii) a method for successively polymerizing at least one type of conjugated diene compound using a dilithium compound as an initiator, then, successively polymerizing at least one type of aromatic vinyl compound containing styrene (St), and, when required, successively polymerizing at least one type of conjugated diene compound.

In order to improve the heat resistance and the weather resistance, the first thermoplastic elastomer (EX) is preferably a hydrogenated product of a block copolymer in which at least some of polymer blocks (xb) containing a conjugated diene compound unit is hydrogenated (also expressed as hydrated). The hydrogenation rate (hydration rate) of the polymer block (xb) is not limited to any particular values, and is preferably 80 to 100%. The lower limit value is more preferably 85%, and particularly preferably 90%.

In this specification, the hydrogenation rate (hydration rate) of the polymer block containing the conjugated diene compound unit can be determined by measuring the iodine values of the block copolymer before and after the hydrogenation reaction.

Examples of the hydrogenation reaction include a method in which a solution obtained by dissolving an un-hydrogenated block copolymer in a solvent inactive to the hydrogenation reaction and the hydrogenation catalyst, or a reaction solution containing an un-hydrogenated block copolymer obtained after the polymerization reaction is prepared, and the un-hydrogenated block copolymer is reacted with hydrogen in the presence of the hydrogenation catalyst.

A commercially available product may be used for the first thermoplastic elastomer (EX).

The first thermoplastic elastomer (EX) may contain, when required, at least one type of functional group such as a carboxy group, a hydroxyl group, an acid anhydride group, an amino group, and an epoxy group in the molecular chain and/or at the end of the molecular chain.

The weight-average molecular weight (Mw) (in terms of standard polystyrene) of the first thermoplastic elastomer (EX) is not limited to any particular values, and is preferably 30,000 to 500,000 in view of the mechanical characteristics and the moldability of the first thermoplastic elastomer (EX). The lower limit value is more preferably 50,000, still more preferably 60,000, particularly preferably 70,000, and most preferably 80,000. The upper limit value is more preferably 400,000, still more preferably 300,000, still more preferably 200,000, particularly preferably 190,000, and most preferably 180,000.

The content of the first thermoplastic elastomer (EX) is 15 to 55 pts.mass based on the total amount of 100 pts.mass of the thermoplastic elastomer (E) because, in that range, the functions and effects (such as the ability to impart chipping resistance) of the first thermoplastic elastomer (EX) are effectively developed. The lower limit value is more preferably 20 pts.mass, and particularly preferably 35 pts.mass. The upper limit value is more preferably 50 pts.mass, and particularly preferably 45 pts.mass.

### (Second Thermoplastic Elastomer (EY))

The elastomer resin composition according to the present disclosure contains at least one type of second thermoplastic elastomer (EY) selected from the group consisting of a block copolymer and a hydrogenated product of the block copolymer, the block copolymer containing a polymer block (ya) containing a styrene (St) unit, and a polymer block (yb) containing a conjugated diene compound unit, and a total amount of a 1,2-bond and a 3,4-bond of the conjugated diene compound unit being 40 mol% or more.

The second thermoplastic elastomer (EY) is one of the matrix components of the elastomer resin composition. The second thermoplastic elastomer (EY) can impart, by containing a polymer block (yb) containing a conjugated diene compound unit in which the total amount of a 1,2-bond and a 3,4-bond is 40 mol% or more therein, an excellent adhesive property and the like for nonpolar resins to the elastomer resin composition.

### <Polymer Block (ya)>

The second thermoplastic elastomer (EY) contains at least one polymer block (ya) containing a styrene (St) unit.

The polymer block (ya) may contain at least one type of aromatic vinyl compound unit other than the styrene (St) unit. The polymer block (ya) may contain at least one type of monomer unit other than the aromatic vinyl compound unit. Examples of aromatic vinyl compounds other than the styrene (St) and monomers other than the aromatic vinyl compound are the same as those of the polymer block (xa).

The content of the styrene (St) unit in the polymer block (ya) is not limited to any particular values, and is preferably 80 to 100 mass%. The lower limit value is more preferably 90 mass%, and particularly preferably 95 mass%.

The content of the at least one type of aromatic vinyl compound unit containing the styrene (St) unit (the total amount in the case of a plurality of types) in the polymer block (ya) is not limited to any particular values, and is preferably 80 to 100 mass%. The lower limit value is more preferably 90 mass%, and particularly preferably 95 mass%.

The content of monomer units other than the aromatic vinyl compound unit (the total amount in the case of a plurality of types) in the polymer block (ya) is not limited to any particular values, and is 20 to 0 mass%. The upper limit value is more preferably 10 mass%, and particularly preferably 5 mass%.

### <Polymer Block (yb)>

The second thermoplastic elastomer (EY) contains at least one polymer block (yb) containing at least one type of conjugated diene compound unit. The total amount of the 1,2- and 3,4-bonds of the at least one type of conjugated diene compound unit contained in the second thermoplastic elastomer (EY) is 40 mol% or more. Note that when the second thermoplastic elastomer (EY) contains a plurality of polymer blocks (yb), the total amount of the 1,2- and 3,4-bonds of the at least one type of conjugated diene compound unit contained in the whole polymer blocks (yb) is 40 mol% or more.

The polymer block (yb) may contain at least one type of monomer unit other than the conjugated diene compound unit. Examples and preferred forms of the conjugated diene compound and examples of other monomers are similar to those of the polymer block (xb).

The content of the conjugated diene compound unit in the polymer block (yb) is not limited to any particular values, and is preferably 80 to 100 mass%. The lower limit value is more preferably 90 mass%, and particularly preferably 95 mass%.

The content of monomer units other than the conjugated diene compound unit in the polymer block (yb) is not limited to any particular values, and is 20 to 0 mass%. The upper limit value is more preferably 10 mass%, and particularly preferably 5 mass%.

The total amount of the 1,2- and 3,4-bonds in the polymer block (xb) is 40 mol% or more in view of the excellent adhesive property for nonpolar resins. The lower limit value is more preferably 45 mol%, particularly preferably 50 mol%, and most preferably 55 mol%. The upper limit value is preferably 90 mol%, more preferably 85 mol%, and particularly preferably 80 mol%.

The 1,2- and 3,4-bonds of the conjugated diene compound unit can be increased by adding at least one type of organic Lewis base to the reaction solution during the anionic polymerization. Further, the total amount of the 1,2- and 3,4-bonds can be easily controlled by the amount of organic Lewis base to be added.

Examples of organic Lewis bases include esters such as ethyl acetate; amines such as triethylamine, N,N,N',N'-tetramethyl ethylenediamine (TMEDA), and N-methylmorpholine; nitrogen-containing heterocyclic aromatic compounds such as pyridine; amides such as dimethylacetamide; ethers such as dimethyl ether, diethyl ether, tetrahydrofuran (THF), and dioxane; glycol ethers such as ethylene glycol dimethyl ether and diethylene glycol dimethyl ether; sulfoxides such as dimethyl sulfoxide; and ketones such as acetone and methyl ethyl ketone.

The bonding form between the polymer blocks (ya) and (yb) is not limited to any particular forms. Examples of forms include straight chain bonding, branched chain bonding, radial bonding, and combinations thereof; and straight chain bonding is preferred. Examples of straight-chain bonding forms include diblock copolymers expressed as ya-yb, triblock copolymers expressed as ya-yb-ya or yb-ya-yb, tetrablock copolymers expressed as ya-yb-ya-yb, pentablock copolymers expressed as ya-yb-ya-yb-ya or yb-ya-yb-ya-yb, (ya-yb)ₙ X-type copolymers (X represents a coupling residue and n represents an integer equal to greater than 2), and combinations thereof. Among them, the triblock copolymer is preferred, and the triblock copolymer expressed as ya-yb-ya is more preferred.

The content of the polymer block (ya) in the second thermoplastic elastomer (EY) is not limited to any particular values, and is preferably 5 to 75 mass% in view of the flexibility and the mechanical characteristics of the second thermoplastic elastomer (EY). The lower limit value is more preferably 10 mass%. The upper limit value is more preferably 70 mass%, still more preferably 65 mass%, still more preferably 60 mass%, still more preferably 55 mass%, still more preferably 50 mass%, particularly preferably 45 mass%, and most preferably 40 mass%.

The content of the polymer block (yb) in the second thermoplastic elastomer (EY) is not limited to any particular values, and is preferably 95 to 25 mass% in view of the flexibility and the mechanical characteristics of the second thermoplastic elastomer (EY). The upper limit value is more preferably 90 mass%. The lower limit value is more preferably 30 mass%, still more preferably 35 mass%, still more preferably 40 mass%, still more preferably 45 mass%, still more preferably 50 mass%, particularly preferably 55 mass%, and most preferably 60 mass%.

The total content of the polymer block (ya) and the polymer block (yb) in the second thermoplastic elastomer (EY) is not limited to any particular values, and is preferably 95 to 100 mass%. The lower limit value is more preferably 97 mass%, particularly preferably 98 mass%, and most preferably 99 mass%.

The second thermoplastic elastomer (EY) may be an un-hydrogenated block copolymer containing at least one polymer block (ya) and at least one polymer block (yb), or a hydrogenated product thereof.

In order to improve the heat resistance and the weather resistance, the second thermoplastic elastomer (EY) is preferably a hydrogenated product of a block copolymer in which at least some of polymer blocks (yb) containing a conjugated diene compound unit is hydrogenated. The hydrogenation rate (hydration rate) of the polymer block (yb) is not limited to any particular values, and is preferably 80 to 100%. The lower limit value is more preferably 85%, and particularly preferably 90%.

The method for manufacturing the second thermoplastic elastomer (EY) is similar to the method for manufacturing the first thermoplastic elastomer (EX). A commercially available product may be used for the second thermoplastic elastomer (EY).

The second thermoplastic elastomer (EY) may contain, when required, at least one type of functional group such as a carboxy group, a hydroxyl group, an acid anhydride group, an amino group, and an epoxy group in the molecular chain and/or at the end of the molecular chain.

The weight-average molecular weight (Mw) (in terms of standard polystyrene) of the second thermoplastic elastomer (EY) is not limited to any particular values, and the preferred range is similar to that for the first thermoplastic elastomer (EX) in view of the mechanical characteristics and the moldability of the second thermoplastic elastomer (EY).

The content of the second thermoplastic elastomer (EY) is 25 to 65 pts.mass based on the total amount of 100 pts.mass of the thermoplastic elastomer (E) because, in that range, the functions and effects (such as the ability to impart an excellent adhesive property for nonpolar resins) of the second thermoplastic elastomer (EY) are effectively developed. The lower limit value is more preferably 30 pts.mass, and particularly preferably 35 pts.mass. The upper limit value is more preferably 60 pts.mass, particularly preferably 55 pts.mass, and most preferably 50 pts.mass.

### (Third Thermoplastic Elastomer (EZ))

The elastomer resin composition according to the present disclosure contains at least one type of third thermoplastic elastomer (EZ) selected from the group consisting of a block copolymer and a hydrogenated product of the block copolymer, the block copolymer containing a polymer block (za) containing an α-methylstyrene (αMSt) unit and a polymer block (zb) containing a conjugated diene compound unit, and a total amount of a 1,2-bond and a 3,4-bond of the conjugated diene compound unit being 40 mol% or more.

The third thermoplastic elastomer (EZ) is one of the matrix components of the elastomer resin composition. The third thermoplastic elastomer (EZ) can impart, by containing a polymer block (za) containing an α-methylstyrene (αMSt) unit therein, rigidity and an excellent adhesive property for polar resins to the elastomer resin composition contains. The third thermoplastic elastomer (EZ) can impart, by containing a polymer block (zb) containing a conjugated diene compound unit in which the total amount of the 1,2- and 3,4-bonds is 40 mol% or more therein, an excellent adhesive property for nonpolar resins to the elastomer resin composition.

### <Polymer Block (za)>

The third thermoplastic elastomer (EZ) contains at least one polymer block (za) containing an α-methylstyrene (αMSt) unit.

The polymer block (za) may contain at least one type of aromatic vinyl compound unit other than the α-methylstyrene (αMSt) unit. Examples of aromatic vinyl compounds other than the α-methylstyrene (αMSt) include styrene (St), 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl) styrene, 1-vinylnaphthalene, and 2-vinylnaphthalene.

The polymer block (za) may contain at least one type of monomer unit other than the aromatic vinyl compound unit. Examples of monomers other than the aromatic vinyl compound are similar to those for the polymer block (xa).

The content of the α-methylstyrene (αMSt) unit in the polymer block (za) is not limited to any particular values, and is preferably 80 to 100 mass% in view of the rigidity of the elastomer resin composition and the excellent adhesive property for polar resins. The lower limit value is more preferably 90 mass%, and particularly preferably 95 mass%.

The content of the at least one type of aromatic vinyl compound unit containing an α-methylstyrene (αMSt) unit in the polymer block (za) is not limited to any particular values, and is preferably 80 to 100 mass%. The lower limit value is more preferably 90 mass%, and particularly preferably 95 mass%.

The content of monomer units other than the aromatic vinyl compound unit in the polymer block (za) is not limited to any particular values, and is 20 to 0 mass%. The upper limit value is more preferably 10 mass%, and particularly preferably 5 mass%.

### <Polymer Block (zb)>

The third thermoplastic elastomer (EZ) contains at least one type of polymer block (zb) containing at least one type of conjugated diene compound unit. The total amount of the 1,2- and 3,4-bonds of the at least one type of conjugated diene compound unit contained in the third thermoplastic elastomer (EZ) is 40 mol% or more. Note that when the third thermoplastic elastomer (EZ) contains a plurality of polymer blocks (zb), the total amount of the 1,2- and 3,4-bonds of the at least one type of conjugated diene compound unit contained in the whole polymer blocks (zb) is 40 mol% or more.

The polymer blocks (zb) may contain at least one type of monomer unit other than the conjugated diene compound unit. Examples and preferred forms of the conjugated diene compound and examples of other monomers are similar to those of the polymer block (xb).

The content of the conjugated diene compound unit (the total amount in the case of a plurality of types) in the polymer block (zb) is not limited to any particular values, and is preferably 80 to 100 mass%. The lower limit value is more preferably 90 mass%, and is particularly preferably 95 mass%.

The content of monomer units other than the conjugated diene compound unit (the total amount in the case of a plurality of types) in the polymer block (zb) is not limited to any particular values, and is 20 to 0 mass%. The upper limit value is more preferably 10 mass%, and particularly preferably 5 mass%.

The total amount of the 1,2- and 3,4-bonds in the polymer block (zb) is 40 mol% or more in view of the excellent adhesive property for nonpolar resins. The lower limit value is more preferably 45 mol%, particularly preferably 50 mol%, and most preferably 55 mol%. The upper limit value is preferably 90 mol%, more preferably 85 mol%, and particularly preferably 80 mol%.

The bonding form between the polymer blocks (za) and (zb) is not limited to any particular forms. Examples of forms include straight chain bonding, branched chain bonding, radial bonding, and combinations thereof; and straight chain bonding is preferred. Examples of straight-chain bonding forms include diblock copolymers expressed as za-zb, triblock copolymers expressed as za-zb-za or zb-za-zb, tetrablock copolymers expressed as za-zb-za-zb, pentablock copolymers expressed as za-zb-za-zb-za or zb-za-zb-za-zb, (za-zb)ₙ X-type copolymers (X represents a coupling residue and n represents an integer equal to greater than 2), and combinations thereof. Among them, the triblock copolymer is preferred, and the triblock copolymer expressed as za-zb-za is more preferred.

The content of the polymer block (za) in the third thermoplastic elastomer (EZ) is not limited to any particular values, and is preferably 5 to 75 mass% in view of the flexibility and the mechanical characteristics of the third thermoplastic elastomer (EZ). The lower limit value is more preferably 10 mass%. The upper limit value is more preferably 70 mass%, still more preferably 65 mass%, still more preferably 60 mass%, still more preferably 55 mass%, still more preferably 50 mass%, particularly preferably by 45 mass%, and most preferably 40 mass%.

The content of the polymer block (zb) in the third thermoplastic elastomer (EZ) is not limited to any particular values, and is preferably 95 to 25 mass% in view of the flexibility and the mechanical characteristics of the third thermoplastic elastomer (EZ). The upper limit value is more preferably 90 mass%. The lower limit value is more preferably 30 mass%, still more preferably 35 mass%, still more preferably 40 mass%, still more preferably 45 mass%, still more preferably 50 mass%, particularly preferably 55 mass%, and most preferably 60 mass%.

The total content of the polymer blocks (za) and (zb) in the third thermoplastic elastomer (EZ) is not limited to any particular values, and is preferably 95 to 100 mass%. The lower limit value is more preferably 97 mass%, particularly preferably 98 mass%, and most preferably 99 mass%.

The third thermoplastic elastomer (EZ) may be an un-hydrogenated block copolymer containing at least one polymer block (za) and at least one polymer block (zb), or a hydrogenated product thereof.

In order to improve the heat resistance and the weather resistance, the third thermoplastic elastomer (EZ) is preferably a hydrogenated product of a block copolymer in which at least some of polymer blocks (zb) containing a conjugated diene compound unit is hydrogenated. The hydrogenation rate (hydration rate) of the polymer block (zb) is not limited to any particular values, and is preferably 80 to 100%. The lower limit value is more preferably 85%, and particularly preferably 90%.

The method for manufacturing the third thermoplastic elastomer (EZ) is similar to the method for manufacturing the second thermoplastic elastomer (EY). A commercially available product may be used for the third thermoplastic elastomer (EZ).

The third thermoplastic elastomer (EZ) may contain, when required, at least one type of functional group such as a carboxy group, a hydroxyl group, an acid anhydride group, an amino group, and an epoxy group in the molecular chain and/or at the end of the molecular chain.

The weight-average molecular weight (Mw) (in terms of standard polystyrene) of the third thermoplastic elastomer (EZ) is not limited to any particular values, and the preferred range is similar to that of the first thermoplastic elastomer (EX) in view of the mechanical characteristics and the moldability of the third thermoplastic elastomer (EZ).

The content of the third thermoplastic elastomer (EZ) is 15 to 35 pts.mass based on the total amount of 100 pts.mass of the thermoplastic elastomer (E) because, in that range, the functions and effects (such as the ability to impart rigidity, an excellent adhesive property for polar resins, and an excellent adhesive property for nonpolar resins) of the third thermoplastic elastomer (EZ) are effectively developed. The lower limit value is more preferably 17 pts.mass, particularly preferably 18 pts.mass, and most preferably 19 pts.mass. The upper limit value is more preferably 30 pts.mass, particularly preferably 27 pts.mass, and most preferably 25 pts.mass.

### (First Polypropylene-based Polymer (PX))

The elastomer resin composition according to the present disclosure contains at least one type of a first polypropylene-based polymer (PX) containing no polar group (i.e., a nonpolar polypropylene-based polymer).

There is such a tendency for the first polypropylene-based polymer (PX) that the smaller its melt flow rate (MFR) is, the larger its melt tension becomes. The melt tension of the first polypropylene-based polymer (PX) measured at 230°C and at a haul-off speed of 4.0 m/min is 2.5×10⁻² N or larger. The lower limit value is more preferably 3.0×10⁻² N, still more preferably 3.5×10⁻² N, particularly preferably 4.0×10⁻² N, and most preferably 4.5×10⁻² N. The upper limit value is not limited to any particular values, and is preferably 50×10⁻² N, more preferably 40×10⁻² N, and particularly preferably 30×10⁻² N.

Further, regarding the elastomer resin composition according to the present disclosure, by containing a first polypropylene-based polymer (PX) having a melt tension equal to or larger than the aforementioned lower limit value, the tackiness becomes appropriate and the sliding property for metals becomes excellent. Therefore, the elastomer resin composition according to the present disclosure can be smoothly separated from the cooling rolls and the conveyance rolls in the film forming process, so that the process passing property is excellent.

In the elastomer resin composition according to the present disclosure, by containing a first polypropylene-based polymer (PX) having a melt tension equal to or larger than the aforementioned lower limit value, the film forming property during the extrusion molding and the like becomes excellent, and the film thickness stability and the like of the film obtained by the extrusion molding or the like becomes excellent.

The MFR of the first polypropylene-based polymer (PX) is not limited to any particular values, and is preferably 0.1 to 20 g/10min. The lower limit value is preferably 0.5 g/10min, and more preferably 1.0 g/10min. The upper limit value is preferably 15 g/10min, and more preferably 10 g/10min.

In this specification, unless otherwise specified, the MFR of the polypropylene-based polymer has a value measured by using a melt indexer at a temperature of 230°C under a load of 21.18N according to JIS K7210.

The first polypropylene-based polymer (PX) is a homopolymer or a copolymer containing a propylene unit and, when required, at least one type of other monomer unit containing no polar group.

Examples of other monomers include α-olefins other than propylene, and its specific examples include ethylene, 1-butene, 1-pentene, 1-hexene, 1-octene, 4-methyl-1-pentene, and cyclohexene.

The ratio of the propylene unit to the whole structural units of the first polypropylene-based polymer (PX) is not limited to any particular values, and is preferably 55 to 100 mol%. The lower limit value is more preferably 65 mol%, still more preferably 75 mol%, particularly preferably 85 mol%, and most preferably 95 mol%.

The ratio of monomer units other than the propylene unit to the whole structural units of the first polypropylene-based polymer (PX) is not limited to any particular values, and is preferably 45 to 0 mol%. The upper limit value is more preferably 35 mol%, still more preferably 25 mol%, particularly preferably 15 mol%, and most preferably 5 mol%.

Examples of polypropylene-based polymers (PX) having the melt tension specified above include polypropylene-based polymers having a cross-linked structure, a long-chain branched structure, a high molecular weight component, and combinations thereof. Among them, a polypropylene-based polymer having a long-chain branched structure is preferred in order to maintain the flexibility of the film. Examples of methods for manufacturing a polypropylene-based polymer having a long-chain branched structure include a method for graft-copolymerizing a radically polymerizable monomer onto polypropylene (Macromolecules 26(1993)3467), a method for copolymerizing propylene and polyene (Japanese Unexamined Patent Application Publication No. H5-194778), a macromer copolymerization method using a metallocene catalyst (Japanese Unexamined Patent Application Publication No. 2009-057542), and a method for melting and mixing polypropylene, a conjugated diene compound, and a radical polymerization initiator (Japanese Unexamined Patent Application Publication No. 2015-098542). Among them, the macromer copolymerization method using a metallocene catalyst or the like is preferred in order to suppress the formation of gel.

The melting point (Tm) of the first polypropylene-based polymer (PX) is not limited to any particular temperatures, and is preferably 100°C or higher in view of the heat resistance of the elastomer resin composition. The lower limit value is more preferably 110°C. The upper limit value is preferably 170°C, more preferably 160°C, and most preferably 150°C.

The content of the first polypropylene-based polymer (PX) is 3 to 15 pts.mass based on 100 pts.mass of thermoplastic elastomer (E) in order to achieve both an excellent process passing property and an excellent film forming property (such as excellent film thickness stability) of the elastomer resin composition, and an adhesive property for various materials. The lower limit value is preferably 5 pts.mass, more preferably 6 pts.mass, and particularly preferably 7 pts.mass. The upper limit value is preferably 12 pts.mass, more preferably 10 pts.mass, and particularly preferably 8 pts.mass.

When the content of the first polypropylene-based polymer (PX) is less than the above-mentioned lower limit value, the process passing property and the film forming property (such as film thickness stability) of the elastomer resin composition may deteriorate, whereas when the content of the first polypropylene-based polymer (PX) is more than the above-mentioned upper limit value, the adhesive property of the elastomer resin composition for polar resins, nonpolar resins, or metals may deteriorate.

### (Second Polypropylene-based Polymer (PY))

The elastomer resin composition according to the present disclosure contains at least one type of a second polypropylene-based polymer (PY) containing a polar group (i.e., a polar group-containing polypropylene-based polymer). The second polypropylene-based polymer (PY) can impart an excellent adhesive property for metals to the elastomer resin composition.

Examples of polar groups include polar atoms such as an oxygen atom, a nitrogen atom, and a sulfur atom; a (meth)acryloyloxy group; a hydroxy group; an amide group; a carboxy group; an acid anhydride group; and halogen atoms such as a chlorine atom.

As an example of a first method for manufacturing a polar group-containing polypropylene-based polymer, there is a method in which propylene, a polar group-containing monomer, and when required, at least one type of other monomer are copolymerized by using a known method. The copolymerization form is not limited to any particular forms, and examples include random copolymerization and block copolymerization.

As an example of a second method for manufacturing a polar group-containing polypropylene-based polymer, there is a method in which a polar group-containing monomer is graft-copolymerized onto a polypropylene-based polymer containing a propylene unit and, when required, at least one type of other monomer unit, and containing no polar group (i.e., a nonpolar polypropylene-based polymer).

Among them, the graft copolymerization method is preferred.

The polar group-containing polypropylene-based polymer manufactured by the first or second manufacturing method described above contains a propylene unit and a polar group-containing monomer unit, and when required, can contain at least one type of other monomer unit.

Examples of polar group-containing monomers include vinyl acetate, vinyl chloride; ethylene oxide, propylene oxide; unsaturated carboxylic acids, or their esters or anhydrides; and (meth)acrylamide. Among them, unsaturated carboxylic acids or their esters or anhydrides are preferred, and examples include (meth)acrylic acid, (meth)acrylate ester, (anhydrous) maleic acid, (anhydrous) fumaric acid, (anhydrous) itaconic acid, and (anhydrous) humic acid. Among them, (anhydrous) carboxylic acids such as (anhydrous) maleic acid are more preferred.

In this specification, (anhydrous) carboxylic acid is a generic term for carboxylic acid and anhydrous carboxylic acid.

Examples of other monomers include α-olefin other than propylene, and its specific examples include ethylene, 1-butene, 1-pentene, 1-hexene, 1-octene, 4-methyl-1-pentene, and cyclohexene.

The total ratio of the propylene unit and the polar group-containing monomer unit to the whole structural units of the polar group-containing polypropylene-based polymer is not limited to any particular values, and is preferably 55 to 100 mol%. The lower limit value is more preferably 65 mol%, more preferably 75 mol%, particularly preferably 85 mol%, and most preferably 95 mol%.

The ratio of the α-olefin unit other than the propylene unit to the whole structural units of the polar group-containing polypropylene-based polymer is not limited to any particular values, and is preferably 45 to 0 mol%. The upper limit value is more preferably 35 mol%, more preferably 25 mol%, particularly preferably 15 mol%, and most preferably 5 mol%.

As the polar group-containing polypropylene-based polymer, polypropylene containing a carboxy group or a carboxylic anhydride group as the polar group is preferred in view of the adhesive property for various materials.

In particular, a polypropylene-based polymer which is modified by graft-copolymerizing (anhydrous) carboxylic acid onto a polypropylene-based polymer containing no polar group (i.e., a nonpolar polypropylene-based polymer) (also referred to as an (anhydrous) carboxylic acid-modified polypropylene-based polymer) is preferred. In particular, an (anhydrous) maleic acid-modified polypropylene-based polymer or the like is more preferred.

The polar groups contained in the polar group-containing polypropylene-based polymer manufactured by the first or second manufacturing method described above may be post-processed after the polymerization reaction. The polar groups such as (meth)acrylic acid and carboxy group may be neutralized by metal ions and thereby converted into ionomers, or esterified by using an alcohol such as methanol and ethanol. Further, the polar group such as a vinyl acetate group may be hydrolyzed.

As an example of a third method for manufacturing a polar group-containing polypropylene-based polymer, there is a method in which a polypropylene-based polymer containing a propylene unit and, when required, at least one type of other monomer unit, and containing no polar group (i.e., a nonpolar polypropylene-based polymer) is oxidized or halogenated (e.g., chlorinated) by using a known method.

The melting point (Tm) of the second polypropylene-based polymer (PY) is 130°C or lower in view of the excellent adhesive property of the elastomer resin composition for metals. The lower limit value is not limited to any particular values, and is preferably 100°C, more preferably 105°C, and particularly preferably 110°C in view of the heat resistance of the elastomer resin composition. The upper limit value is more preferably 125°C.

In order to achieve both the excellent adhesive property for metals and the heat resistance, the content of the second polypropylene-based polymer (PY) is 7.5 to 20 pts.mass based on 100 pts.mass of thermoplastic elastomer (E). The lower limit value is preferably 8 pts.mass, more preferably 9 pts.mass, and particularly preferably 10 pts.mass. The upper limit value is preferably 17.5 pts.mass, and more preferably 15 pts.mass.

When the content of the second polypropylene-based polymer (PY) is equal to or more than the aforementioned lower limit value, the adhesive property of the elastomer resin composition for metals becomes excellent, whereas when the content is equal to or less than the upper limit value, the heat resistance of the elastomer resin composition becomes excellent.

### (Optional Component)

### <Antioxidant (AO)>

The elastomer resin composition according to the present disclosure may contain at least one type of antioxidant (AO). Examples of antioxidants (AO) include phenolic antioxidants, phosphoric antioxidants, lactone-based antioxidants, and hydroxy-based antioxidants. The elastomer resin composition according to the present disclosure preferably contains a plurality of types of antioxidants (AO) including a phenolic antioxidant (AO-F) and a phosphoric antioxidant (AO-P).

In general, the thermal stability of a thermoplastic elastomer and a polypropylene-based polymer containing an aromatic vinyl compound unit and a conjugated diene compound unit is unsatisfactory. Therefore, when the heating and melting time increases, there is a risk that they are oxidized and degraded, and are decomposed and/or cross-linked. Therefore, if the residence time in the heated-and-molten state increases during the manufacturing of an elastomer resin composition containing the aforementioned resins and during the molding process thereof, there is a risk that the thermoplastic elastomer and/or the polypropylene-based polymer could be thermally decomposed and hence the amount of remaining monomers in the resin composition could increase, so that the heat resistance may deteriorate. Further, foreign substances such as oxidized and degraded substances of the thermoplastic elastomer and/or the polypropylene-based polymer may be generated, so that a defect in appearance may occur.

In general, in the oxidizing and degrading mechanism of a resin composition, firstly, one C-H bond in a carbon chain is decomposed by heat, and a radical is thereby generated. This radical immediately reacts with oxygen and becomes a peroxide radical (ROO·). This peroxide radical takes away H from a nearby carbon chain, and thereby generate a new radical and a peroxide. The oxidation by this radical chain reaction is also referred to as primary oxidation.

Further, a new radical is also generated by self-cleavage of the peroxide generated by the above-described reaction, and hence the radical chain reaction proceeds. The oxidation by this radical chain reaction is also referred to as secondary oxidation.

According to the research of the inventors of the present application, the following fact has been found.

A phenolic antioxidant (AO-F), which serves as a primary antioxidant (also referred to as a primary oxidation inhibitor), can trap a peroxide radical and convert it into a peroxide. Meanwhile, the phenolic antioxidant itself becomes a phenoxy radical, so that it can trap another peroxide radical. However, an unstable peroxide may become a peroxide radical again by heat, thus possibly causing a radical chain reaction in the presence of oxygen. A phosphoric antioxidant (AO-P), which serves as a secondary antioxidant (also referred to as a secondary oxidation inhibitor), can decompose an unstable peroxide and convert it into stable alcohol.

By using an appropriate amount of phenolic antioxidant (AO-F) as a primary antioxidant with an appropriate amount of phosphoric antioxidant (AO-P) as a secondary antioxidant in combination, the thermal stability of the thermoplastic elastomer (E) and the polypropylene-based polymer (P) can be effectively improved during the long-time heating and melting, so that the oxidation and degradation, and the decomposition can be effectively suppressed. Therefore, according to the technology using these antioxidants (AO) in combination according to the present disclosure, the thermal stability and the thermal-decomposition resistance of the elastomer resin composition can be effectively improved. Further, according to the technology using these antioxidants (AO) in combination according to the present disclosure, the generation of foreign substances such as oxidized and degraded substances of the thermoplastic elastomer and/or the polypropylene-based polymer can be suppressed during the long-time heating and melting, so that the occurrence of a defect in appearance can be suppressed.

At least one type of known phenolic antioxidant (AO-F) can be used. Examples include 1,3,5-tris(3,5-di-tert-butyl-4-hydroxybenzyl)-1,3,5-triazine-2,4,6 (1H,3H,5H)-trione, 3-(3,5-di-tert-butyl-4-hydroxybenzyl) stearyl propionate, 4,4'-butylidenebis (6-tert-butyl-m-cresol), 1,1,3-tris(2-methyl-4-hydroxy-5-t-butylphenyl) butane, pentaerythritol tetrakis [3-(3,5-di-tert-butyl-4-hydroxybenzyl) propionate], bis[3-[3-(tert-butyl)-4-hydroxy-5-methylphenyl] propanoic acid] 2,4,8,10-tetraoxaspiro [5.5] undecane-3,9 diylbis (2-methylpropane-2,1-diyl), and 1,3,5-trimethyl-2,4,6 tris(3',5'-di-t-butyl-4'-hydroxybenzyl).

At least one type of commercially available phenolic antioxidant (AO-F) can be used. The phenolic antioxidant (AO-F) preferably contains a hindered phenolic antioxidant.

The phenolic antioxidant (AO-F) preferably contains a phenolic antioxidant containing a quaternary carbon and having a molecular weight of 250 to 1,500.

The molecular weight is more preferably 700 to 1,200.

The phenolic antioxidant (AO-F) preferably contains a hindered phenolic antioxidant containing a quaternary carbon and having a molecular weight of 250 to 1,500.

In the elastomer resin composition according to the present disclosure, the content of the phenolic antioxidant (AO-F) (unless otherwise specified, the total amount in the case of a plurality of types) is preferably 0.10 to 5.00 pts.mass based on the total of 100 pts.mass of the thermoplastic elastomer (E) and the polypropylene-based polymer (P). The lower limit value is more preferably 0.15 pts.mass, and particularly preferably 0.20 pts.mass. The upper limit value is more preferably 4.00 pts.mass, still more preferably 3.00 pts.mass, particularly preferably 2.00 pts.mass, and most preferably 1.50 pts.mass.

At least one type of known phosphoric antioxidant (AO-P) can be used. Examples include 3,9 bis(octadecyloxy)-2,4,8,10-tetraoxa-3,9-diphospaspiro [5.5] undecane, 3,9 bis(2,6-di-tert-butyl-4-methylphenoxy)-2,4,8,10-tetraoxa-3,9-diphospaspiro [5.5] undecane, 2,4,8,10-tetra-tert-butyl-6-[(2-ethylhexane-1-yl) oxy]-12H-dibenzo [d,g] [1,3,2] dioxaphosphosine, tris(2,4-di-tert-butylphenyl) phosphite, trisnonylphenyl phosphite, diphenyl isodecyl phosphite, and triphenylphosphite biphenyl-4,4'-diylbis [bis(2,4-di-tert-butylphenoxy) phosphine].

At least one type of commercially available phosphorus-based antioxidant (AO-P) can be used.

A commercially available multi-component phosphorus-based antioxidant containing a plurality of types of phosphorus-based antioxidants may be used as the phosphorus-based antioxidant (AO-P).

The phosphorus-based antioxidant (AO-P) preferably has a spiro structure or a biphenyl structure, and contain a phosphorus-based antioxidant having a molecular weight of 500 to 1,500. The molecular weight is more preferably 500 to 1,200.

In the elastomer resin composition according to the present disclosure, the content of the phosphorus-based antioxidant (AO-P) (unless otherwise specified, the total amount in the case of a plurality of types) is preferably 0.01 to 5.00 pts.mass based on the total of 100 pts.mass of the thermoplastic elastomer (E) and the polypropylene-based polymer (P).

The lower limit value is more preferably 0.05 pts.mass, particularly preferably 0.10 pts.mass, and most preferably 0.15 pts.mass. The upper limit value is more preferably 4.00 pts.mass, still more preferably 3.00 pts.mass, particularly preferably 2.00 pts.mass, and most preferably 1.50 pts.mass.

The elastomer resin composition containing a phenolic antioxidant (AO-F) and a phosphorus-based antioxidant (AO-P) according to the present disclosure can have excellent thermal-decomposition resistance. The thermal-decomposition resistance can be represented by, for example, an index of the time until the weight loss rate becomes 5% (also referred to as a 5% weight loss time) based on the time at which the temperature reaches 240°C and the weight when the temperature is raised to 240°C in an air atmosphere and held at that temperature. The 5% weight loss time can be measured by using a thermogravimetric apparatus. The 5% weight loss time of the elastomer resin composition containing a phenolic antioxidant (AO-F) and a phosphorus-based antioxidant (AO-P) according to the present disclosure can be 10 minutes or longer, 15 minutes or longer, 20 minutes or longer, or 25 minutes or longer.

### <Other Polymers>

The elastomer resin composition according to the present disclosure can contain at least one type of polymer other than those described above. Examples of other polymers include polyolefinic resins such as polyethylene, polypropylene-based polymers other than the polypropylene-based polymers (PX) and (PY), polybutene-1, poly-4-methylpentene-1, and polynorbornene; (meth)acrylic resins; styrene-based resins such as polystyrene, high-impact polystyrene, methyl methacrylate-styrene copolymer (MS resin), styrene-maleic anhydride copolymer (SMA resin), styrene-maleic anhydride-methyl methacrylate copolymer (SMM resin), acrylonitrile-styrene copolymer (AS resin), acrylonitrile-butadiene-styrene (ABS) resin, acrylonitrile-ethylenepropylene-diene styrene (AES) resin, acrylonitrile-acrylonitrile-styrene (AAS) resin, acrylonitrile-chlorinated ethylene-styrene (ACS) resin, and methacrylic butadiene styrene (MBS) resin; polyester-based resins such as polyethylene terephthalate and polybutylene terephthalate; polyamide-based resins such as nylon 6, nylon 66, and polyamide elastomer; polycarbonate-based resins; other thermosetting resins such as polyphenylene sulfide, polyether ether ketone, polysulfone, polyphenylene oxide, polyimide, polyether imide, polyvinyl chloride, polyvinylidene chloride, polyvinylidene fluoride, polyvinyl alcohol, ethylene-vinyl alcohol copolymer, polyacetal, ethylene-vinyl acetate copolymer, phenoxy-based resins, and ethylene-based ionomers; thermosetting resins such as epoxy resins, phenolic resins, melamine resins, and silicone resins; polyurethane and chlorinated polyurethane resins; modified polyphenylene ether; silicone-modified resins; acrylic rubber and silicone rubber; acrylic rubber and silicone rubber; acrylic thermoplastic elastomers such as diblock copolymers and triblock copolymers of methyl methacrylate copolymer block-acrylate n-butyl copolymer block; and olefinic rubbers such as IR, EPR, and EPDM.

### <Other Additives>

The elastomer resin composition according to the present disclosure may contain, when required, at least one type of additive other than the antioxidant (AO). Examples of additives include tackifier resins, softeners, lubricants, thermal stabilizers, thermal degradation inhibitors, light stabilizers, polymer processing aids, colorants such as pigments and coloring agents, flame retardants, antistatic agents, matting agents, silicone oils, blocking inhibitors, ultraviolet absorbers, mold release agents, foaming agents, antifoaming agents, antibacterial agents, mold retardants, and fragrances.

Examples of tackifier resins include an aliphatic unsaturated hydrocarbon resin, an aliphatic saturated hydrocarbon resin, an alicyclic unsaturated hydrocarbon resin, an alicyclic saturated hydrocarbon resin, an aromatic hydrocarbon resin, a hydrogenated aromatic hydrocarbon resin, a rosin ester resin, a hydrogenated rosin ester resin, a terpene phenol resin, a hydrogenated terpene phenol resin, a terpene resin, a hydrogenated terpene resin, an aromatic hydrocarbon-modified terpene resin, a coumaron-indene resin, a phenol resin, and a xylene resin.

As the softening agent, an ordinary softening agent for rubber or plastic can be used. Examples include process oils such as paraffin-based ones, naphthene-based ones, and aromatic ones; phthalic acid derivatives such as dioctylphthalate and dibutylphthalate; white oil; mineral oil; oligomers of ethylene and α-olefin; paraffin wax; liquid paraffin; polybutene; low molecular weight polybutadiene; and low molecular weight polyisoprene.

The timing at which other polymers and additives which may be contained in the elastomer resin composition according to the present disclosure are added may be during or after the manufacturing of at least one type of resin among the thermoplastic elastomers (EX) to (EZ) and the polypropylene-based polymers (PX) and (PY), or during the manufacturing of the elastomer resin composition.

As described above, according to the present disclosure, it is possible to provide an elastomer resin composition having an excellent process passing property, an excellent film forming property, an excellent adhesive property for various materials such as metals and resins, and excellent chipping resistance.

### [Method for Manufacturing Elastomer Resin Composition]

The method for manufacturing an elastomer resin composition according to the present disclosure is not limited to any particular methods. In view of the dispersibility and the compatibility of each component, a method in which thermoplastic elastomers (EX) to (EZ), polypropylene-based polymers (PX) and (PY), and when required, at least one type of optional component are melted and kneaded is preferred. The melting and kneading can be performed by using a known mixing or kneading apparatus such as an extruder, a kneader-ruder, a mixing roll, and a Bambury mixer. In view of the kneading property and the compatibility, an extruder such as a single-screw extruder, a twin-screw extruder, and a multi-screw extruder is preferred, and a twin-screw extruder is more preferred. The temperature at the melting and kneading may be equal to or higher than the melting temperatures of the thermoplastic elastomers (EX) to (EZ) and the polypropylene-based polymers (PX) and (PY), and is preferably 150 to 300°C, and more preferably 200 to 300°C.

The form of the elastomer resin composition according to the present disclosure is not limited to any particular forms, and examples include pellets and a powder.

### [Molded Article]

A molded article according to the present disclosure includes a layer or a member made of the above-described elastomer resin composition according to the present disclosure, and may be a layer or a member entirely made of the elastomer resin composition according to the present disclosure.

Examples of molding methods include a solution casting method, an extrusion method, a compression molding method (also referred to as a press molding method), an injection molding method, an inflation molding method, a blow molding method, a calender molding method, a solution casting method, a vacuum molding method, and a pneumatic molding method.

Examples of molded articles include sheet-like objects having a single-layer structure or a laminated structure, such as films, sheets, and plates; fibers, pipes, tubes, and rods; particles; and arbitrary three-dimensional structures. The molded article may be a laminate or a composite material including a layer or a member made of the elastomer resin composition according to the present disclosure and a layer or a member made of other resins or various materials other than resins. If necessary, a surface treatment such as printing, painting, plating, vapor deposition, and sputtering may be performed on the molded article obtained by a known molding method; and/or a shaping process such as bending, folding, and cutting (also referred to as secondary molding) may be performed.

### [Film]

A film according to the present disclosure includes a layer made of the above-described elastomer resin composition according to the present disclosure (also referred to as an elastomer resin composition layer), and may be a layer entirely made of the elastomer resin composition according to the present disclosure (elastomer resin composition layer). The film according to the present disclosure is a single-layer film or a laminated film including at least one layer made of the above-described elastomer resin composition according to the present disclosure.

In this specification, unless otherwise specified, the "elastomer resin composition layer" is a resin layer made of the elastomer resin composition according to the present disclosure.

The layer made of the elastomer resin composition according to the present disclosure (elastomer resin composition layer) can function as a viscous-adhesive layer, a shock absorbing layer, and the like. In the laminated film, at least one elastomer resin composition layer is preferably disposed on the uppermost surface layer.

The film having the above-described single-layer structure or the laminated structure according to the present disclosure can be used as a viscous-adhesive film, a shock absorbing film, or the like.

Examples of methods for forming a film according to the present disclosure include a solution casting method, an extrusion molding method, a compression molding method (press molding method), an inflation molding method, a blow molding method, a calender molding method, and a melt casting method. Further, an extrusion molding method, a compression molding method (press molding method), and the like are preferred. Among them, an extrusion molding method is preferred, and a T-die method is more preferred.

A method for forming a single-layer film by a T-die method will be described hereinafter.

An elastomer resin composition according to the present disclosure is melted and kneaded by using an extruder, and extruded in a molten state from a T-die having a wide discharge outlet. Examples of extruders include a single-screw extruder, a twin-screw extruder, a multi-screw extruder, and combinations thereof. The melting temperature is higher than the glass transition temperature (Tg) of the elastomer resin composition, and is preferably 150 to 300°C, and more preferably 200 to 300°C. In order to suppress the coloring, the melting and kneading are preferably performed under a reduced pressure using a vent, or in a stream of nitrogen.

It is preferred to melt-filter the molten resin by using a filter before the extrusion in order to remove foreign substances. By forming a film using the melt-filtered molten resin, a film with few defects, which would otherwise be caused by foreign substances and gel, can be obtained. The filtering-material of the filter is selected as appropriate according to the temperature at the use, the viscosity, the precision of the filtration, and the like. Examples include a nonwoven fabric made of glass fibers or the like; a sheet made of cellulose impregnated with a phenol resin; a metal fiber nonwoven fabric sintered sheet; a metal powder sintered sheet; a wire mesh; and combinations thereof. Among them, in view of the heat resistance and the durability, a filter in which a plurality of metal fiber nonwoven fabric sintered sheets are laminated is preferred. The precision of the filtering of the filter is not limited to any particular values, and is preferably 200 µm or finer, more preferably 100 µm or finer, and particularly preferably 50 µm or finer.

In order to increase the accuracy of the thickness of the film, the film may by formed in an extrusion line equipped with a gear pump.

The resin in the molten state, which has been extruded from the T-die in the form of the film, is cooled by using a plurality of cooling rolls. Examples of cooling rolls include metal rigid rolls and metal elastic rolls.

The metal rigid rolls are non-elastic rolls made of a metal such as stainless steel, and examples include drill rolls and spiral rolls. The surface of the metal rigid roll is preferably a mirror surface because a film of which the surface is highly smooth can be formed.

The metal elastic roll is a roll including an elastic outer cylinder made of a metal thin film on the outer periphery. The metal elastic roll consists of, for example, a metal shaft roll made of stainless steel or the like, a metal thin film made of stainless steel or the like (elastic outer cylinder) covering the outer peripheral surface of the shaft roll, and a fluid hermetically contained between the shaft roll and the metal thin film (elastic outer cylinder), and can be elastic because of the presence of the fluid. Examples of fluids include water and oil.

The thickness of the metal thin film of the metal elastic roll is not limited to any particular values, and is preferably about 2 to 8 mm. The metal thin film is preferably bendable and flexible, and preferably has a seamless structure with no welded part. Such a metal elastic roll including a metal thin film has excellent durability, can be handled in the same manner as a normal mirror-surface roll when the metal thin film is mirror-smoothed, and with which it is possible to manufacture a film having high surface smoothness. The single-layer film obtained after the cooling is collected by take-off rolls.

The above-described steps including the extrusion, the cooling, and the collection are continuously performed.

The film according to the present disclosure may be a co-extrusion molded film including two or more layers made of the elastomer resin composition according to the present disclosure, or a co-extrusion molded film including a layer made of the elastomer resin composition according to the present disclosure and another resin layer. In the co-extrusion molding, the resins (compositions) of which respective layers are made are melted and kneaded by using an extruder, and are co-extruded, from a T-die including a wide discharge outlet, in the form of a film having a desired laminated structure. Examples of lamination methods include a feed-block method in which layers are laminated before they are charged into the T-die, and a multi-manifold method in which layers are laminated inside the T-die. The multi-manifold method is preferred in order to improve the smoothness of the interface between layers. The thermoplastic resin laminate in the molten state co-extruded from the T-die is pressurized and cooled by using a plurality of cooling rolls. The film having the laminated structure obtained after the cooling is collected by a pair of take-off rolls. The above-described steps including the extrusion, the cooling, and the collection are continuously performed.

Note that in this specification, in general, a laminate in a heated-and-molten state is referred to as a "thermoplastic resin laminate", and a laminate in a solidified state is referred to as a "thermoplastic resin laminated film". However, there is no clear boundary between them.

The thickness of the film according to the present disclosure can be designed according to the use or the like, and is preferably 10 to 700 µm. The lower limit value is more preferably 30 µm, and particularly preferably 50 µm. The upper limit value is more preferably 500 µm, still more preferably 400 µm, still more preferably 300 µm, particularly preferably 200 µm, and most preferably 150 µm. When the thickness is equal to or larger than the aforementioned lower limit value, the film can be easily formed and has excellent impact resistance and an excellent warpage prevention property during the heating. When the thickness is equal to or smaller than the aforementioned upper limit value, the film has an excellent film forming property or excellent film forming stability.

In the film according to the present disclosure, the layer made of the elastomer resin composition according to the present disclosure (elastomer resin composition layer) can function as a viscous-adhesive layer, and the film according to the present disclosure can be a viscous-adhesive film.

The film according to the present disclosure can be, when required, sandwiched between a pair of mold release films during or after the film formation. Examples of mold release films include those obtained by performing a mold release treatment on at least one of the surfaces of a base material made of a thermoplastic resin, paper, a metal foil, or a combination thereof. Examples of thermoplastic resins include polyester resins such as polyethylene terephthalate (PET) and polybutylene terephthalate; an ethylene-vinyl acetate copolymer saponified material; polyvinyl chloride and polyvinylidene chloride; polyethylene and polypropylene; poly 4-methyl-1-pentene; a polycarbonate-based resin; and polyamide resins such as polyamide 6, polyamide 66, and polyamide 12. Examples of metal foils include an aluminum foil and an iron foil. The thickness of the mold release film is not limited to any particular values, and is typically about 5 to 100 µm.

### [Composite Film, Decorative Film]

In an embodiment, the film according to the present disclosure can be a composite film including at least one layer made of an elastomer resin composition according to the present disclosure (elastomer resin composition layer), and at least one metal layer. The metal layer can function as a decorative layer.

In another embodiment, the film according to the present disclosure may be a decorative film including at least one layer made of an elastomer resin composition according to the present disclosure (elastomer resin composition layer), and at least one decorative layer. Examples of decorative layers include metal layers, colored layers, printed layers, nonwoven fabrics, artificial leather, natural leather, and combinations thereof. The decorative layer including a metal layer can impart a metallic property and luster to the film. The thickness of the decorative layer is not limited to any particular values, and is preferably thinner than the layer made of the elastomer resin composition according to the present disclosure (elastomer resin composition layer) in view of the moldability, the economy, and the like.

As described above, the layer made of the elastomer resin composition according to the present disclosure (elastomer resin composition layer) can function as a viscous-adhesive layer, a shock-absorbing layer, and the like. In the composite film and the decorative film according to the present disclosure, the at least one elastomer resin composition layer is preferably disposed on the uppermost surface layer.

Since the layer made of the elastomer resin composition according to the present disclosure (elastomer resin composition layer) has an excellent adhesive property for metals, the composite film and the decorative film according to the present disclosure can include a metal layer with an excellent adhesive strength. Examples of metals include Al, Si, Ti, Cr, Ni, Zn, Ga, Y, Zr, Nb, In, Sn, Hf, Ta, and W, alloys thereof, and combinations thereof.

Since the layer made of the elastomer resin composition according to the present disclosure (elastomer resin composition layer) has an excellent adhesive property for various materials, the decorative film according to the present disclosure can include a decorative layer made of an arbitrary material.

The film according to the present disclosure can include at least one resin layer other than the layer made of the elastomer resin composition according to the present disclosure (elastomer resin composition layer) as a base-material layer, a decorative layer, a protective layer of a metal layer, a protective layer of a decorative layer, or the like.

Examples of resins of which the other resin layers are made include (meth)acrylic resin; polyolefin-based resins such as polyethylene, polypropylene, polybutene-1, poly-4-methylpentene-1, and polynorbornene; styrene-based resins such as acrylonitrile-styrene copolymer (AS resin) and acrylonitrile-butadiene-styrene (ABS) resin; polyester-based resins such as polyethylene terephthalate (PET) and polybutylene terephthalate; polyamide-based resins such as nylon 6, nylon 66, and polyamide elastomer; polycarbonate-based resins; polyvinyl chloride, polyvinylidene chloride, polyvinylidene fluoride, polyvinyl alcohol, and ethylene-vinyl alcohol copolymers; polyacetal; polyurethane; and thermoplastic resins such as combinations of them.

In view of the transparency, the weather resistance, the surface luster property, the abrasion resistance, and the like, a (meth)acrylic resin-containing layer or the like is preferred as the other resin layer.

In view of the moldability, the impact resistance, and the like, the (meth)acrylic resin-containing layer preferably contains at least one type of (meth)acrylic resin, and at least one type of rubber component selected from the group consisting of acrylic rubber particles (preferably two or three layers of acrylic multilayer structure polymer particles) and acrylic block copolymers.

The (meth)acrylic resin is a homopolymer or a copolymer containing at least one type of (meth)acrylate unit, and known ones can be used therefor. In particular, a methacrylic resin which is a homopolymer or a copolymer containing at least one type of methacrylate unit including a methyl methacrylate (MMA) unit is preferred.

Known acrylic rubber particles (preferably two or three layers of acrylic multilayer structure polymer particles) and known acrylic block copolymers can be used.

The other resin layer(s) can contain at least one type of additive as required. Examples of additives are similar to those for the elastomer resin composition according to the present disclosure.

The composite film according to the present disclosure can include, as a base-material layer and/or a protective layer of the metal layer, other resin layers such as a (meth)acrylic resin-containing layer above the metal layer.

The decorative film according to the present disclosure can include, as a base-material layer and/or a protective layer of the decorative layer, other resin layers such as a (meth)acrylic resin-containing layer above the decorative layer.

The other resin layer(s) may be an uncolored layer or a colored layer. Examples of methods for coloring a resin film made of a material for the other resin layer include a method for coloring a resin by impregnating it with a pigment and/or a dye before the rein is molded into a film; and a dyeing method for coloring a resin film by submerging it in a dye dispersion liquid.

The resin film made of the material for the other resin layer can include, on at least one of the surfaces, a printing layer with a design, text, a pattern of figures or the like, colors, or a combination thereof.

The resin film made of the material for the other resin layer can include a metal layer on at least one of the surfaces. The metal layer can be made of a metal foil. Further, the metal layer can be formed on the resin film by a vapor-phase method such as a vacuum deposition method, a sputtering method, an ion plating (IP) method, a laser ablation method, a thermochemical vapor deposition method, a chemical vapor deposition method (CVD method), and a plasma chemical vapor deposition (plasma CVD method).

In order to suppress the stress-caused whitening during the molding, the resin film is preferably one that is not whitened when it is bent by 180°.

The composite film and the decorative film according to the present disclosure can be manufactured by a known method. Examples of methods for manufacturing a composite film and a decorative film according to the present disclosure include a method for laminating a single-layer film or a laminated film including a layer made of an elastomer resin composition according to the present disclosure (elastomer resin composition layer), and a metal layer, a metal layer including a decorative layer, or a decorative layer-containing film on at least one of the surfaces of a resin film by pressure bonding (preferably thermocompression bonding) or the like.

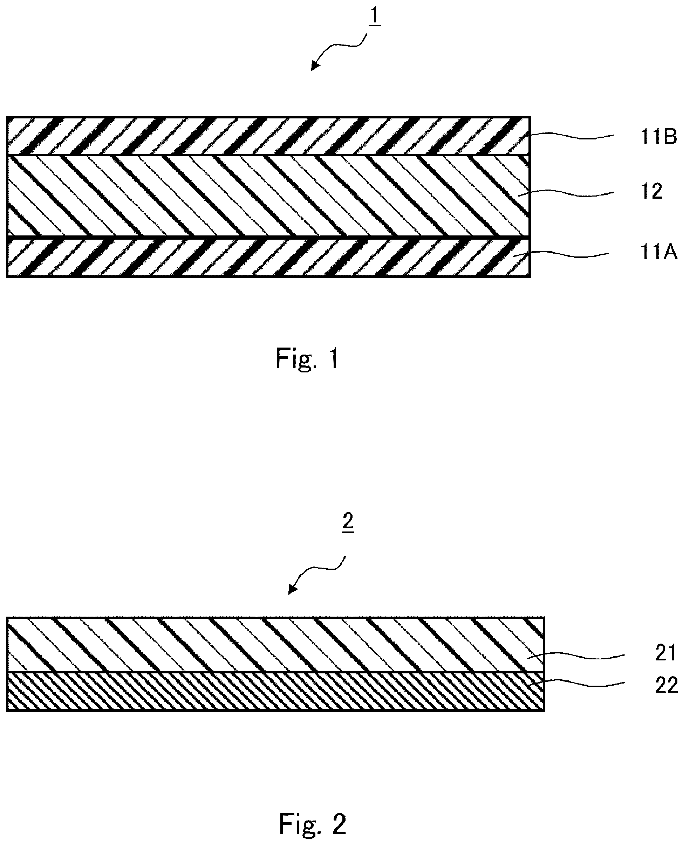

Fig. 1 is a schematic cross-sectional diagram of a film according to an embodiment of the present invention.

The film 1 according to this embodiment is a film having a three-layer structure in which layers each made of the elastomer resin composition according to the present disclosure (elastomer resin composition layers) 11A and 11B are respectively laminated on both surfaces of another resin layer 12 (preferably a (meth)acrylic resin containing layer). The composition and the thickness of the elastomer resin composition layer 11A and those of the elastomer resin composition layer 11B may be the same as each other or may not be the same as each other.

The structure of the film according to the present disclosure can be changed as appropriate, and its examples include a single-layer film consisting solely of a layer made of the elastomer resin composition according to the present disclosure (elastomer resin composition layer) 11A or 11B, and a two-layer structure film in which a layer made of the elastomer resin composition according to the present disclosure (elastomer resin composition layer) 11A or 11B is laminated on one side of another resin layer 12.

Fig. 2 is a schematic cross-sectional diagram showing an example of a metal layer-containing film.

In the drawing, a reference numeral 2 indicates a metal layer-containing film; a reference numeral 21 indicates a base-material layer; and a reference numeral 22 indicates a metal layer. The metal layer-containing film 2 includes a base-material layer 21 consisting of a resin layer such as a methacrylic resin-containing layer, and a metal layer 22 which is formed on one of the surfaces of the base-material layer 21 by a vapor deposition method or the like. The metal layer 22 can function as a decorative layer.

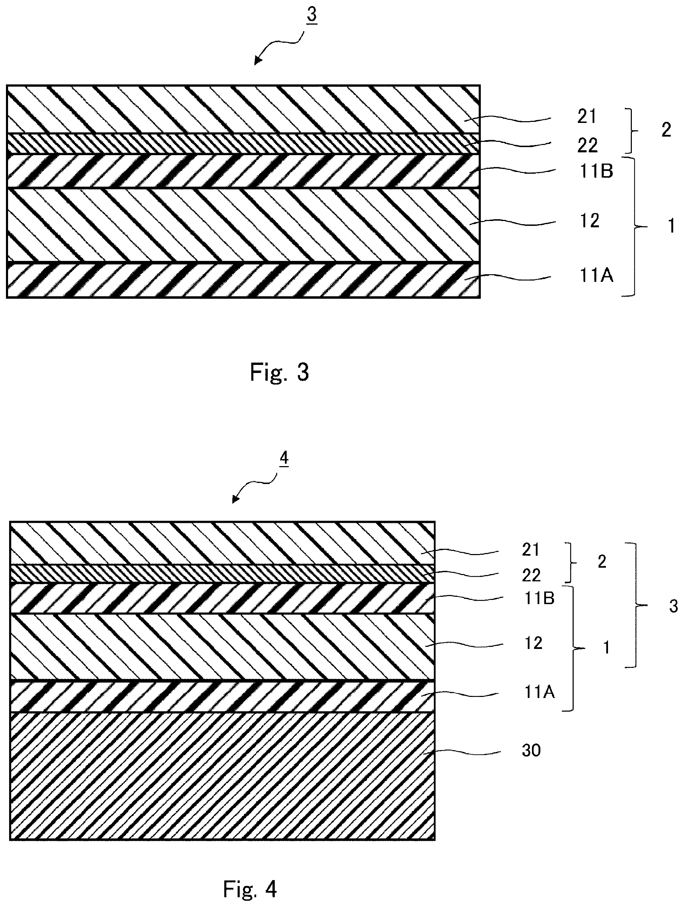

Fig. 3 is a schematic cross-sectional diagram showing a decorative film according to an embodiment of the present invention.

The decorative film 3 is one in which the metal layer-containing film 2 shown in Fig. 2 is laminated on one of the elastomer resin composition layers, i.e., the elastomer resin composition layer 11B, of the film 1 shown in Fig. 1.

The decorative film 3 shown in Fig. 3 can be manufactured by laminating the film 1 shown in Fig. 1 and the metal layer-containing film 2 shown in Fig. 2 by a method such as pressure bonding (preferably thermocompression bonding). The base-material layer 21 can function as a protective layer of the metal layer 22 by laminating it in such a manner that the surface of the metal layer 22 is covered by the base-material layer 21.

### [Composite Molded Article, Decorated Molded Article]

In an embodiment, the molded article according to the present disclosure can be a composite molded article including, on at least a part of a surface of an adherend, a layer made of the elastomer resin composition according to the present disclosure and a metal layer in a successive manner.

In an embodiment, the molded article according to the present disclosure can be a decorated molded article including, on at least a part of a surface of an adherend, a layer made of the elastomer resin composition according to the present disclosure and a decorative layer in a successive manner.

The layer made of the elastomer resin composition according to the present disclosure (elastomer resin composition layer) can bond the adherend to the metal layer or the decorative layer excellently.

Examples of materials of the adherend include thermoplastic or thermosetting resins, and organic materials such as processed wood or plants other than wood (e.g., kenaf); and inorganic materials such as metals, metal compounds, ceramics, carbon, and stone (e.g., marble); and combinations thereof.

Examples of thermoplastic resins are similar to those of the resins of which the other resin layers are made which can be included in the above-described composite film or the decorative film according to the present disclosure, and polypropylene-based resins, ABS resins, and the like are preferred. Examples of thermosetting resins include epoxy-based resins, phenol-based resins, and melamine-based resins.

Examples of metals include Al, Si, Ti, Cr, Mn, Fe, Co, Ni, Cu, Zn, Ga, Ge, Y, Zr, Nb, Mo, Pd, Ag, In, Sn, Hf, Ta, W, Pt, Au, alloys thereof (such as stainless steel), and combinations thereof.

The composite molded article and the decorated molded article according to the present disclosure can be manufactured by a known method using the above-described composite film or the decorative film according to the present disclosure.

Examples of manufacturing method include a method for simultaneously performing the lamination of a composite film or a decorative film according to the present disclosure on at least a part of a surface of an adherend prepared in advance by a molding method such as a vacuum molding method, a pneumatic molding method, a vacuum pneumatic molding method, and a compression molding method, and the secondary molding of the composite film or the decorative film according to the present disclosure: and an injection molding simultaneous bonding method in which a composite film or a decorative film according to the present disclosure, which has been, when required, secondarily molded (also referred to as a pre-molded) by a vacuum molding method, a pneumatic molding method, or the like, is inserted into an injection molding mold, and then a thermoplastic resin is injected into this mold, so that the molding of the adherend and the lamination of the composite film or the decorative film according to the present disclosure on at least a part of a surface of the adherend are simultaneously performed. In the latter method, the composite film or the decorative film according to the present disclosure may be pre-molded by using an injection molding machine for adherend molding.

Fig. 4 is a schematic cross-sectional diagram showing a decorated molded article according to an embodiment of the present invention.

The decorated molded article 4 is one in which the decorative film 3 shown in Fig. 3 is laminated on at least a part of a surface of an adherend 30.

### [Use]

An elastomer resin composition according to the present disclosure, a film containing it, a laminate containing it, or a molded article containing it can be used in arbitrary uses. The elastomer resin composition according to the present disclosure has an excellent film forming property, an excellent process passing property, an excellent adhesive property for various materials, and excellent chipping resistance, and hence is suitable for uses such as decorative films and decorated molded articles. A decorative film and a decorated molded article according to the present disclosure can be suitably used in various uses in which a design property is required.

Examples of suitable uses include signboard components or marking films such as advertising towers, stand signboards, side signboards, transom signboards, and rooftop signboards; display components such as showcases, partition boards, and store displays; lighting components such as fluorescent lamp covers, mood lighting covers, lampshades, luminous ceilings, luminous walls, and chandeliers; interior components such as furniture, wallpaper, pendant lights, and mirrors; building components such as doors, sashes, domes, safety window glass, partitions, stair waists, balcony waists and roofs of leisure buildings; transportation-related components such as aircraft windshields, pilot visors, motorcycle windshields, motor boat windshields, bus light shielding plates, automobile side visors, rear visors, head wings, headlight covers, automobile interior members, and automobile exterior members such as bumpers; electronic apparatus components such as mobile phones and personal computers; various household electrical appliance components such as television-set protective masks; solar cell components such as back films for solar cells and front films for flexible solar cells; audio and video nameplates, and stereo covers; vending machines; medical equipment components such as incubators and x-ray components; apparatus-related components such as clock panels, machine covers, instrument covers, laboratory equipment, dial faces, and observation windows; traffic-related components such as road signboards, guide boards, curve mirrors, and soundproof walls; bathroom components such as bathtubs, and sanitary components; greenhouses, large water tanks, and box water tanks; stationery such as rulers and desk mats; game components, toys, and musical instruments; and decorative and protective films provided on surfaces of face protection masks for welding.

### Examples

Examples according to the present invention and comparative examples will be described hereinafter.

### [Evaluation Item and Evaluation Method]

Evaluation items and evaluation methods are as follows.

### (Polymerization Conversion Rate)

A polymerization conversion rate was determined by a gas chromatography analysis. INERTCAP 1 (film thickness 0.4 µm, inner diameter 0.25 mmφ, length 60 m) manufactured by GL Sciences Inc. was connected, as a column, to "Gas Chromatograph GC-14A" manufactured by Shimadzu Corporation. Analyses were carried out under the below-shown conditions, and polymerization conversion rates were calculated from obtained data.
Injection Temperature: 250°C,
Detector Temperature: 250°C.
Temperature Profile: Held at 60°C for 5 minutes -> Temperature was raised to 250°C at a temperature raising rate of 10°C/min -> Held at 250°C for 10 minutes.

### (Weight-Average Molecular Weight (Mw), Number-Average Molecular Weight (Mn), Molecular Weight Distribution (Mw/Mn))

Weight-average molecular weights (Mw), number-average molecular weights (Mn), and molecular weight distributions (Mw/Mn) of resins were determined by gel permeation chromatography (GPC) analyses. A GPC apparatus "HLC-8320" manufactured by Tosoh Corporation was used as a measuring apparatus. As a separation column, one obtained by connecting "TSK guard column Super HZ-H", "TSK gel HZM-M", and "TSK gel Super HZ 4000" manufactured by Tosoh Corporation in series was used. A differential refractive index detector (RI detector) was used as a detector.

A sample solution was prepared by dissolving 4 mg of a resin to be measured in 5 ml of tetrahydrofuran. The temperature of the column oven was set at 40°C. Tetrahydrofuran was used as an eluent, and an eluent flow rate was set to 0.35 ml/min. 20 µl of the sample solution was injected into the apparatus, and its chromatogram was measured. GPC measurements were performed for 10 pieces of standard polystyrene or standard polymethyl methacrylate (PMMA) of which the molecular weight was within the range of 400 to 5,000,000, and a calibration curve showing a relationship between retention times and molecular weights was created. The Mw, Mn, and Mw/Mn in terms of standard polystyrene or standard PMMA of the resin to be measured were determined based on this calibration curve.

### (Hydrogenation Rate)

The hydrogenation rate of the polymer block containing the conjugated diene compound unit was determined by measuring the iodine values of the block copolymer before and after the hydrogenation reaction.

### (Total Amount of 1,2-Bond and 3,4-Bond)

¹H-NMR of the thermoplastic elastomer containing the polymer block containing the conjugated diene compound unit was measured. The total amount of the 1,2- and 3,4-bonds was calculated from a ratio of the integrated value of a first peak at 4.2 to 5.0 ppm originating from the conjugated diene compound units of the 1,2- and 3,4-bonds, and the integrated value of a second peak at 5.0 to 5.45 ppm originating from the conjugated diene compound unit of the 1,4-bond.

### (Melting Point)

The melting point of the polypropylene-based polymer was measured by using a differential scanning calorimetry apparatus ("DSC-50 (product number)" manufactured by Shimadzu Corporation). About 5 mg of a sample of a polypropylene film was put in an aluminum pan and set in the aforementioned apparatus. After nitrogen replacement was performed for 30 minutes or longer, the temperature was temporarily raised from a room temperature (20 to 25°C) to 200°C at a rate of 10°C/min in a nitrogen stream of 10 ml/min, held for 5 minutes, and lowered to 40°C at a rate of 10°C/min (primary scanning). Next, the temperature was raised to 200°C at a rate of 10°C/min (secondary scanning), and a heat-of-melting curve was obtained. The maximum peak temperature (°C) in the heat-of-melting curve was determined as the melting point (Tm).

### (Melt Tension)

The melt tension of the polypropylene-based polymer was measured by using a capillary rheometer equipped with a pulley-type tension measuring unit ("Capilograph 1D" manufactured by Toyo Seiki Co., Ltd.). The polypropylene-based polymer was put into a cylinder having a diameter of 9.55 mmφ heated to 230°C. The polypropylene-based polymer in the molten state was extruded from an orifice having a diameter of 2.0 mmφ and a length of 40 mm under the condition of a pushing speed of 20 mm/min, and collected by a pair of take-off rolls under the condition of a taking-off speed of 4.0 m/min. The tension exerted on the pulley-type tension measuring jig was measured as the melt tension (N).

### (Sliding Property)

A test piece having a size of 100 mm × 200 mm was cut from a single layer film (E-Ex) made of the elastomer resin composition (and having a thickness of 150 µm). The test piece was pressed by a hand onto and thereby bonded to one of the surfaces of a stainless steel plate (SUS plate), which was placed horizontally to the ground, had a smooth surface, and was larger than the single layer film (E-Ex). Further, a metal plate having a weight of 100g was placed on the test piece. In this state, the single layer film (E-Ex) was pulled by a hand and evaluated according to the following criteria.
Excellent (∘): The single layer film was able to be smoothly slid without being caught.
Poor (×): The single layer film was able to be slid, but was caught.

### (Film Thickness Stability)

A test piece having a size of 120 mm × 200 mm was cut from a single layer film (E-Ex) made of the elastomer resin composition (and having a thickness of 150 µm). Note that the longitudinal direction of the test piece corresponds to the extruding direction (resin flow direction) during the molding. The thickness of the test piece was measured by a micrometer at 5 points in total (at intervals of 50 mm), i.e., at 0 mm, 50 mm, 100 mm, 150 mm, and 200 mm from the center on one of the short sides, along the central axis parallel to the longitudinal direction. A difference between the maximum value and the minimum value (also referred to as the maximum film thickness difference) was determined and evaluated according to the following criteria.
Excellent (∘): The maximum film thickness difference is 25 µm or smaller.
Poor (×): The maximum film thickness difference is larger than 25 µm.

### (Adhesive Strength of Elastomer Resin Composition for Polypropylene (PP))

A test piece having a length of 25 mm and a width of 150 mm, having a laminated structure of "elastomer resin composition layer/polyimide layer/polypropylene layer", and including a direct bonding part between the elastomer resin composition layer and the polypropylene layer was cut from a laminated film (E-PP).

In accordance with JIS K6854-2, a peeling test was carried out by using an autograph ("AGS-X" manufactured by Shimadzu Corporation) under the conditions: a peeling angle 180°, a pulling speed 300 mm/min, and an environmental temperature 23°C.

The peeling strength of the elastomer resin composition layer from the polypropylene layer was measured at the direct bonding part between the elastomer resin composition layer and the polypropylene layer by starting the peeling of the elastomer resin composition layer from the place where a polyimide film was disposed as a non-adhesive spacer. This peeling strength was used as data for the adhesive strength of the elastomer resin composition for polypropylene (PP), and evaluated according to the following criteria.
Excellent (∘): The adhesive strength is 20 N/25 mm or larger.
Poor (×): The adhesive strength is smaller than 20 N/25 mm.

Note that since the elastomer resin composition layer and the polypropylene layer are not directly bonded to each other at the place where the polyimide layer was disposed, the peeling test was easily carried out by starting the peeling from the place where the polyimide layer was disposed. The same applies to the evaluation item of the adhesive strength of the elastomer resin composition for a methacrylic resin and that of the adhesive strength of the elastomer resin composition for indium (which will be described later). The polyimide layer is a layer that is used to facilitate the starting of the peeling test, and is not an essential layer for the actual decorative film and the actual molded article.

### (Adhesion Strength of Elastomer Resin Composition for Methacrylic Resin)

A test piece having a length of 25 mm and a width of 150 mm, having a laminated structure of "elastomer resin composition layer/polyimide layer/methacrylic resin composition layer", and including a direct bonding part between the elastomer resin composition layer and the methacrylic resin composition layer was cut from a laminated film (E-M).

A peeling test was carried out in a manner similar to that for the above-described "Adhesion Strength of Elastomer Resin Composition for Polypropylene (PP)".

The peeling strength of the elastomer resin composition layer from the methacrylic resin composition layer was measured at the direct bonding part between the elastomer resin composition layer and the methacrylic resin composition layer by starting the peeling of the elastomer resin composition layer from the place where a polyimide film was disposed as a non-adhesive spacer. This peeling strength was used as data for the adhesive strength of the elastomer resin composition for the methacrylic resin, and evaluated according to the following criteria.
Excellent (∘): The Adhesion strength is 50 N/25 mm or larger.
Poor (×): The adhesion strength is smaller than 50 N/25 mm.

### (Adhesive Strength of Elastomer Resin Composition for Indium)

A test piece having a length of 25 mm and a width of 100 mm, having a laminated structure of "methacrylic resin composition layer/indium layer/polyimide layer/second elastomer resin composition layer/methacrylic resin composition layer/first elastomer resin composition layer", and including a direct bonding part between the indium layer and the second elastomer resin composition layer was cut from the decorative film (DF2).

A peeling test was carried out in a manner similar to that for the above-described "Adhesion Strength of Elastomer Resin Composition for Polypropylene (PP)".

The peeling strength of the indium layer from the second elastomer resin composition layer was measured at the direct bonding part between the indium layer and the second elastomer resin composition layer by starting the peeling of the second elastomer resin composition layer from the place where a polyimide film was disposed as a non-adhesive spacer. This peeling strength was used as data for the adhesive strength of the elastomer resin composition for indium, and was evaluated according to the following criteria.
Excellent (∘): The adhesive strength is 10 N/25 mm or larger.
Poor (×): The adhesive strength is smaller than 10 N/25 mm.

### (Chipping Resistance)

50g of crushed stones (No. 7) were struck against a surface of an indium layer (decorative layer) side of a plate-like decorated molded article (DM) from a distance of 350 mm by using a Gravelo Tester (manufactured by Suga Test Instruments Co., Ltd.) under the conditions: test piece temperature: -20°C, test piece mounting angle: 90° with respect to spraying axis of shot material, and air pressure: 0.4 MPa. The surface of the decorated molded article, which had been subjected to the test, was visually observed, and evaluated according to the following criteria.
Excellent (∘): No chipping (damage and/or defect) was observed.
Poor (×): At least one chipping (damage and/or defect) was observed.

### (5% Weight Loss Time)

Using a thermogravimetry apparatus ("TGA-50" manufactured by Shimadzu Corporation), a TG curve was obtained by raising the temperature of 5 mg of the resin to be measured from a room temperature (20 to 25°C) to 240°C at a temperature raising rate of 10°C/min under a nitrogen atmosphere and keeping this temperature for 45 minutes. The time at which the temperature reached 240°C was defined as a reference time (0 minutes), and the weight at this time point was defined as a reference weight (100%). Then, the time at which the weight loss rate became 5% (5% weight loss time) was determined.

### [Manufacturing or Preparation of Resin (Composition)]

The resins (compositions) manufactured or prepared were as follows.

### (Manufacturing Example 1) (Manufacturing of First Thermoplastic Elastomer (EX-1))

50.0 kg of cyclohexane as a solvent and 61.1 g of a 10.5 mass% cyclohexane solution of sec-butyllithium (6.42 g of sec-butyllithium) as an anionic polymerization initiator were charged into and mixed in a pressure-resistant container of which the inside had been dried by nitrogen substitution. This solution was heated to 50°C, and then 0.81 kg of styrene (St) was added and polymerized for one hour. Next, 10.87 kg of isoprene was added and polymerized for two hours, and then, 0.81 kg of styrene (St) was added and polymerized for one hour. In this way, a reaction solution containing a polystyrene-polyisoprene-polystyrene triblock copolymer was obtained. To this reaction solution, 5 mass% of palladium carbon (amount of supported palladium: 5 mass%) based on the above-described block copolymer was added as a hydrogenation catalyst, and the reaction was carried out for 10 hours under conditions of a hydrogen pressure of 2 MPa and a temperature of 150°C. After being cooled and depressurized, a thermoplastic elastomer (EX-a) (hydrogenated product of polystyrene-polyisoprene-polystyrene triblock copolymer) was obtained by removing the palladium carbon by filtration, concentrating the filtrate, and drying the concentrated filtrate in a vacuum. The ratio of the total amount of the 1,2- and 3,4-bonds in the polyisoprene block in the thermoplastic elastomer (EX-a) was 7 mol%.

Separately, 50.0 kg of cyclohexane as a solvent and 420.0 g of a 10.5 mass% cyclohexane solution of sec-butyllithium (44.1 g of sec-butyllithium) as an anionic polymerization initiator were charged into and mixed in a pressure-resistant container of which the inside had been dried by nitrogen substitution. This solution was heated to 50°C, and then 2.83 kg of styrene (St) was added and polymerized for one hour. Next, 19.81 kg of isoprene was added and polymerized for two hours. In this way, a reaction solution containing a polystyrene-polyisoprene diblock copolymer was obtained. Next, a thermoplastic elastomer (EX-b) (hydrogenated product of polystyrene-polyisoprene diblock copolymer) was obtained by performing the hydrogenation, the filtration removal of the palladium carbon, and the vacuum drying in a manner similar to the above-described method. The ratio of the total amount of the 1,2- and 3,4-bonds in the polyisoprene block in the thermoplastic elastomer (EX-b) was 7 mol%.

A first thermoplastic elastomer (EX-1) was obtained by melting and kneading the obtained thermoplastic elastomers (EX-a) and (EX-b) by using a twin-screw extruder ("ZSK 26 Mega Compounder" manufactured by Coperion GmbH) (ratio (L/D) of effective screw length (L) to screw diameter (D) = 54) under conditions of a screw rotation speed of 300 rpm and a melting kneading temperature of 200°C. The ratio of the total amount of the 1,2- and 3,4-bonds in the polyisoprene block in the first thermoplastic elastomer (EX-1) was 7 mol%.

### (Manufacturing Example 2) (Manufacturing of Second Thermoplastic Elastomer (EY-1))

50.0 kg of cyclohexane as a solvent, 94.1 g of a 10.5 mass% cyclohexane solution of sec-butyllithium (9.9 g of sec-butyllithium) as an anionic polymerization initiator, and 300g of tetrahydrofuran as a Lewis base were charged into and mixed in a pressure-resistant container of which the inside had been dried by nitrogen substitution. After this solution was heated to 50°C, 1.25 kg of styrene (St) was added and polymerized for one hour. Next, 10.00 kg of isoprene was added and polymerized for two hours, and then, 1.25 kg of styrene (St) was added and polymerized for one hour. In this way, a reaction solution containing a polystyrene-polyisoprene-polystyrene triblock copolymer was obtained. Next, a second thermoplastic elastomer (EY-1) (hydrogenated product of polystyrene-polyisoprene-polystyrene triblock copolymer) was obtained by performing the hydrogenation, the filtration removal of the palladium carbon, and the vacuum drying in a manner similar to Manufacturing Example 1. The ratio of the total amount of the 1,2- and 3,4-bonds in the polyisoprene block in the second thermoplastic elastomer (EY-1) was 55 mol%.

### (Manufacturing Example 3) (Manufacturing of Third Thermoplastic Elastomer (EZ-1))

4.29 kg of α-methylstyrene (αMSt), 6.25 kg of cyclohexane, 1.18 kg of methylcyclohexane, and 0.15 kg of tetrahydrofuran were charged into and mixed in a pressure-resistant container of which the inside had been dried by nitrogen substitution. 0.42L of a 1.3M cyclohexane solution of sec-butyllithium was added to this solution and polymerized at -10°C for five hours. The weight-average molecular weight (Mw, in terms of standard polystyrene) of poly (α-methylstyrene) (block S) three hours after the start of the polymerization was 6,600, and the polymerization conversion rate of α-methylstyrene was 90%. Then, 0.88 kg of butadiene was added to this reaction solution, and after the polymerization was performed at -10°C for 30 minutes, 41.8 kg of cyclohexane was added. The polymerization conversion rate of butadiene at this point was 90%. After this process, a poly (α-methylstyrene) block (S)-polybutadiene block (t1) copolymer was obtained. The weight-average molecular weight (Mw, in terms of standard polystyrene) of the polybutadiene block (t1) was 3,700, and the amount of the 1,2 bond was 81 mol%.

A poly (α-methylstyrene) block (S)-polybutadiene block (t1)-polybutadiene block (t2) copolymer was obtained by further adding 7.71 kg of butadiene to the above-described reaction solution, and polymerizing it at 50°C for two hours. The weight-average molecular weight (Mw, in terms of standard polystyrene) of the polybutadiene block (t2) was 29,800, and the amount of the 1,2-bond was 40 mol%.

0.54L of a 0.5M toluene solution of dichloro dimethylsilane was added to the above-described reaction solution, and a coupling reaction was thereby carried out at 50°C for one hour. After this reaction, poly (α-methylstyrene)-polybutadiene-poly (α-methylstyrene) triblock copolymer (poly (α-methylstyrene) block (S)-polybutadiene block (t1)-polybutadiene block (t2)-X-polybutadiene block (t2)-polybutadiene block (tl)-poly (α-methylstyrene) block (S) copolymer) was generated as a coupling product. Note that X represents a coupling residue.

The content of the poly (α-methylstyrene) block in the obtained poly (a-methylstyrene)-polybutadiene-poly (α-methylstyrene) triblock copolymer was 31 mass%, and the amount of the 1,4 bond in the whole polybutadiene blocks (t1+t2) was 55 mol%.

Note that a GPC analysis was performed for the above-described coupling product and the uncoupled block copolymer (poly (α-methylstyrene) block (S)-polybutadiene block (t1)-polybutadiene block (t2) copolymer), and the coupling efficiency, which was determined from the ratio of the integrated values of the UV absorption peaks, was 94%.

A third thermoplastic elastomer (EZ-1) was obtained by adding a Ziegler-based hydrogenation catalyst consisting of nickel octylate and triethylaluminum to the above-described reaction solution under a hydrogen atmosphere, and thereby carrying out a hydrogenation reaction at 80°C at a hydrogen pressure of 0.8 MPa for 5 hours. The main component of the third thermoplastic elastomer (EZ-1) was the hydrogenated product of the poly (a-methylstyrene)-polybutadiene-poly (α-methylstyrene) triblock copolymer (i.e., the hydrogenated product of the above-described coupling product), and its content was 94 mass%.

The weight-average molecular weight (Mw, in terms of standard polystyrene) of the third thermoplastic elastomer (EZ-1) was 79,500; the number-average molecular weight (Mn, in terms of standard polystyrene) was 78,700; Mw/Mn was 1.01; the hydrogenation rate in the whole polybutadiene blocks (t1+t2) was 97.5%; and the ratio of the total amount of the 1,2- and 3,4-bonds in the polybutadiene block was 45 mol%.

### (First Polypropylene-Based Polymer (PX) or (PXC))

(PX-1) "WAYMAX (Registered Trademark) MFX 8" manufactured by Japan Polypropylene, MFR at 230°C at 21.18 N: 1.1 g/10 min, Melt tension: 24.5× 10⁻² N,
(PX-2) "WAYMAX (Registered Trademark) MFX 3" manufactured by Japan Polypropylene, MFR at 230°C at 21.18 N: 9.0 g/10 min, Melt tension: 4.9×10⁻² N, and
(PXC-3) (for comparison) "WAYMAX (Registered Trademark) WSX 03" manufactured by Japan Polypropylene, MFR at 230°C at 21.18 N: 7.0 g/10 min, Melt tension: 0.4×10⁻² N.

### (Second Polypropylene-Based Polymer (PY) or (PYC))

(PY-1) Maleic anhydride-modified polypropylene, "UMEX (Registered Trademark) 5200" manufactured by Sanyo Chemical Industries Ltd., Melting point 124°C,
(PY-2) Maleic anhydride-modified polypropylene, "UMEX (Registered Trademark) 5500" manufactured by Sanyo Chemical Industries, Ltd., Melting point 123°C,
(PY-3) Maleic anhydride-modified polypropylene, "UMEX (Registered Trademark) 5202W" manufactured by Sanyo Chemical Industries, Ltd., Melting point 115°C,
(PYC-4) Maleic anhydride-modified polypropylene, "UMEX (Registered Trademark) 1001" manufactured by Sanyo Chemical Industries, Ltd., Melting point 142°C,
(PYC-5) Maleic anhydride-modified polypropylene, "UMEX (Registered Trademark) 1010" manufactured by Sanyo Chemical Industries, Ltd., Melting point 135°C, and
(PYC-6) Maleic anhydride-modified polypropylene, "ADMER (Registered Trademark) QF551" manufactured by Mitsui Chemicals, Inc., Melting point 147°C.

### (Polypropylene Film)

(PP-F) Nonpolar polypropylene film, "NOVATEC (Registered Trademark) MA3" manufactured by Japan Polypropylene.

### (Adherend)

As an adherend (PP-M), a plate-like polypropylene molded article having a length of 100 mm, a width of 40 mm, and a thickness of 3 mm, obtained by injection-molding nonpolar polypropylene ("J708UG" manufactured by Prime Polymer Co., Ltd.) at 230°C using an injection molding machine (SG-100, Sumitomo Heavy Industries, Ltd.) was prepared.

### (Manufacturing Example 4) (Manufacturing of Methacrylic Resin (M))

Methacrylic resins (M1) and (M2) shown below were manufactured by an ordinary method.
(M1) Methyl methacrylate (MMA)-methyl acrylate (MA) copolymer (content of MMA unit: 93.6 mass%, content of MA unit: 6.4 mass%, Mw (in terms of standard PMMA) = 120,000, Mw/Mn = 2.1),
(M2) Methyl methacrylate (MMA)-methyl acrylate (MA) copolymer (content of MMA unit: 99.3 mass%, content of MA unit: 0.7 mass%, Mw (in terms of standard PMMA) = 84,000, Mw/Mn = 2.1).

### (Manufacturing Example 5) (Manufacturing of Multilayer-structured polymer particles (R1))

In a reactor equipped with an agitator, a thermometer, a nitrogen gas feeding part, a monomer feeding tube, and a reflux condenser, 100 pts.mass of deionized water was put, and then, 0.019 pts.mass of a surfactant (sodium polyoxyethylene alkyl ether acetate "NIKKOL-ECT-3NEX" manufactured by Nikko Chemicals Co., Ltd.) and 0.10 pts.mass of sodium carbonate were added to and dissolved in the deionized water. After the inside of the reactor was replaced with nitrogen gas and thereby brought into a substantially oxygen-free state, the aqueous solution was heated to 80°C.

0.04 pts.mass of potassium persulfate was added to the above-described aqueous solution, and the mixture was stirred for 5 minutes. Then, a mixture of 32.6 pts.mass of methyl methacrylate (MMA), 2.1 pts.mass of methyl acrylate (MA), and 0.07 pts.mass of allyl methacrylate was continuously dropped over 50 minutes. After the addition was finished, the mixture was kept undisturbed for 40 minutes so that the polymerization rate became 98% or higher, and then emulsion polymerization was carried out.

Next, 0.05 pts.mass of potassium persulfate was added to the obtained latex and the mixture was stirred for 5 minutes. Then a mixture of 36.6 pts.mass of n-butyl acrylate (n-BA), 7.9 pts.mass of styrene (St), and 0.89 pts.mass of allyl methacrylate was continuously dropped over 60 minutes. After the addition was finished, the mixture was kept undisturbed for 90 minutes so that the polymerization rate became 98% or higher, and then seed emulsion polymerization was carried out. At this point, the volume-average particle diameter of the multilayer-structured polymer particles in the latex, which was measured by a dynamic light scattering method using a laser diffraction/scattering-type particle size distribution measuring apparatus, was 0.09 µm.

Next, 0.02 pts.mass of potassium persulfate was added to the obtained latex and the mixture was stirred for 5 minutes. Then, a mixture of 18.6 pts.mass of methyl methacrylate (MMA), 1.2 pts.mass of methyl acrylate (MA), and 0.04 pts.mass of n-octylmercaptan (n-OM) was continuously dropped over 30 minutes. After the addition was finished, the mixture was kept undisturbed for 60 minutes so that the polymerization rate became 98% or higher, and then seed emulsion polymerization was carried out.

The finally-obtained latex was put into a container equipped with a stirrer. A magnesium sulfate aqueous solution was added to the latex, which was being stirred, so that salting-out and solidification occurred. An acrylic multilayer-structured polymer particles (R1) were obtained by washing the obtained coagulation with water, and dehydrating and drying the washed coagulation.

### (Manufacturing Example 6) (Manufacturing of Multilayer-structured Polymer Particles (R2))

In a reactor equipped with an agitator, a thermometer, a nitrogen gas feeding part, a monomer feeding tube, and a reflux condenser, 100 pts.mass of deionized water were added, and then, 0.019 pts.mass of a surfactant (PELEX SS-H manufactured by Kao Corporation) and 0.5 pts.mass of sodium carbonate added to and dissolved in the deionized water. After the inside of the reactor was replaced with nitrogen gas and thereby brought into a substantially oxygen-free state, the aqueous solution was heated to 80°C.

0.02 pts.mass of potassium persulfate was added to the above-described aqueous solution and the mixture was stirred for 5 minutes. Then, a mixture of 9.4 pts.mass of methyl methacrylate (MMA), 0.6 pts.mass of methyl acrylate (MA), and 0.02 pts.mass of allyl methacrylate was continuously dropped over 20 minutes. After the addition was finished, the mixture was kept undisturbed for 30 minutes so that the polymerization rate became 98% or higher, and then emulsion polymerization was carried out. The volume-average particle diameter at this point was 0.21 µm.

Next, 0.07 pts.mass of potassium persulfate was added to the obtained latex and the mixture was stirred for 5 minutes. Then, a mixture of 41.1 pts.mass of n-butyl acrylate (n-BA), 8.9 pts.mass of styrene (St), and 2.0 pts.mass of allyl methacrylate was continuously dropped over 80 minutes. After the addition was finished, the mixture was kept undisturbed for 60 minutes so that the polymerization rate became 98% or higher, and then seed emulsion polymerization was carried out.

Next, 0.07 pts.mass of potassium persulfate was added to the obtained latex and the mixture was stirring for 5 minutes. Then, a mixture of 37.6 pts.mass of methyl methacrylate (MMA), 2.4 pts.mass of methyl acrylate (MA), and 0.12 pts.mass of n-octylmercaptan (n-OM) was continuously dropped over 60 minutes. After the addition was finished, the mixture was kept undisturbed for 60 minutes so that the polymerization rate became 98% or higher, and then seed emulsion polymerization was carried out.

The finally-obtained latex was put into a container equipped with a stirrer. A magnesium sulfate aqueous solution was added to the latex, which was being stirred, so that salting-out and solidification occurred. An acrylic multilayer-structured polymer particles (R2) were obtained by washing the obtained coagulation with water, and dehydrating and drying the washed coagulation.

### (Manufacturing Example 7) (Manufacturing of Multilayer-structured Polymer Particles (R3))

200 pts.mass of deionized water, 1 pts.mass of sodium dodecylbenzenesulfonate, and 0.05 pts.mass of sodium carbonate were charged into a reactor equipped with an agitator, a thermometer, a nitrogen gas feeding part, a monomer feeding tube, and a reflux condenser. After the inside of the reactor was sufficiently replaced with nitrogen gas and thereby brought into a substantially oxygen-free state, the aqueous solution was heated to 80°C.

0.01 pts.mass of potassium persulfate was added to the above-described aqueous solution and the mixture was stirred for 5 minutes. Then, a mixture of 9.48 pts.mass of methyl methacrylate (MMA), 0.5 pts.mass of n-butyl acrylate (n-BA), and 0.02 pts.mass of allyl methacrylate was continuously dropped over 20 minutes. After the addition was finished, the mixture was kept undisturbed for 30 minutes so that the polymerization rate became 98% or higher, and then emulsion polymerization was carried out.

Next, 0.03 pts.mass of potassium persulfate was added to the obtained latex and the mixture was stirred for 5 minutes. Then, a mixture of 1.45 pts.mass of methyl methacrylate (MMA), 27.67 pts.mass of n-butyl acrylate (n-BA), and 0.88 pts.mass of allyl methacrylate was continuously dropped over 40 minutes. After the addition was finished, the mixture was kept undisturbed for 30 minutes so that the polymerization rate became 98% or higher, and then seed emulsion polymerization was carried out.

Next, 0.06 pts.mass of potassium persulfate was added to the obtained latex and the mixture was stirred for 5 minutes. Then, a mixture of 53.73 pts.mass of methyl methacrylate (MMA), 5.97 pts.mass of n-butyl acrylate (n-BA), and 0.3 pts.mass of n-octyl mercaptan (n-OM) was continuously dropped over 100 minutes. A latex containing multilayer-structured polymer particles (R3) was obtained by, after the addition was finished, keeping the mixture undisturbed for 60 minutes so that the polymerization rate became 98% or higher, and carrying out seed emulsion polymerization. The volume-average particle diameter of the multilayer-structured polymer particles (R3) was 0.10 µm.

Next, the latex containing the multilayer-structured polymer particles (R3) was frozen at -30°C over 4 hours. The frozen latex was put into hot water having a temperature of 80°C and a volume twice that of the latex. Then, the mixture was stirred and thereby transformed into a slurry, and then kept undisturbed at 80°C for 20 minutes. Acrylic multilayer-structured polymer particles (R3) were obtained by dehydrating the slurry and drying the dehydrated slurry at 70°C.

### (Manufacturing Example 8) (Manufacturing of Block Copolymer (B -1))

A block copolymer (B-1) shown below was manufactured by an ordinary method.
(B-1) Acrylic triblock copolymer, methyl methacrylate (MMA) polymer block (bl)-(n-butyl acrylate (n-BA) polymer block (b2))-(methyl methacrylate (MMA) polymer block (b1), b1:b2:b1 (mass ratio) = 14.3:50.0:35.7, MMA unit: n-BA unit (mass ratio) = 50:50, weight-average molecular weight (Mw, in terms of standard PMMA) = 70,000.

### (Manufacturing Example 9) (Manufacturing of Methacrylic Resin Composition (MR1))

55.7 pts.mass of pellets of methacrylic resin (M1), 33.6 pts.mass of pellets of multilayer-structured polymer particles (R1), 6.7 pts.mass of pellets of multilayer-structured polymer particles (R2), and 4 pts.mass of pellets of a block copolymer (B-1) were melted and kneaded by using a twin-screw extruder, and extruded into strands. Pellets of a methacrylic resin composition (MR1) was obtained by cutting the obtained strands by using a pelletizer.

### (Manufacturing Example 10) (Manufacturing of Methacrylic Resin Composition (MR2))

10 pts.mass of methacrylic resin (M2) and 90 pts.mass of multilayer-structured polymer particles (R3) were melted and kneaded at 230°C by using a twin-screw extruder, and extruded into strands. Pellets of a methacrylic resin composition (MR2) was obtained by cutting the obtained strands by using a pelletizer.

### (Phenol-Based Antioxidant (AO-F))

(AO-F1) Hindered phenolic antioxidant, pentaerythritol tetrakis [3-(3,5-di-tert-butyl-4-hydroxybenzyl) propionate], "Irganox 1010" manufactured by BASF Japan, molecular weight: 1178,
(AO-F2) Hindered phenolic antioxidant, bis[3-[3-(tert-butyl)-4-hydroxy-5-methylphenyl] propanoic acid] 2,4,8,10-tetraoxaspiro [5.5] undecane-3,9-diylbis(2-methylpropane-2,1-diyl), "ADK STB AO-80" manufactured by ADEKA, molecular weight: 741.

### (Phosphoric Antioxidant (AO-P))

(AO-P1) Multi-component phosphoric antioxidant containing five types of compounds shown below, "HOSTANOX P-EPQ" manufactured by Clariant Japan, molecular weight: 595 to 1,035.

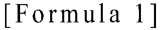

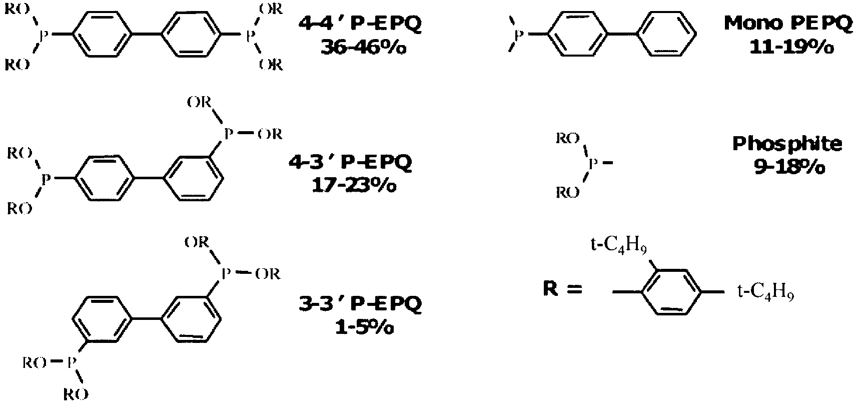

(AO-P2) Phosphoric antioxidant, 3,9-bis(octadecyloxy)-2,4,8,10-tetraoxa-3,9-diphosphaspiro [5.5] undecane, "ADK STB PEP-8" manufactured by ADEKA, molecular weight: 733.

### [Examples E1 to E5, Comparative Examples EC1 to EC11]

### (Manufacturing of Elastomer Resin Composition)

In each of Examples E1 to E5 and Comparative Examples EC1 to EC11, at least one type of thermoplastic elastomer (E) and at least one type of polypropylene-based polymer (P) were melted and kneaded at 230°C by using a twin-screw extruder ("TEM-28" manufactured by Shibaura Machine Co., Ltd.) in formulations shown in Table 1 or 2, and extruded into strands. Pellets (E-P) of an elastomer resin composition was obtained by cutting the obtained strands by using a pelletizer.

In Tables 1 and 2, each of EP1 to EP5 and EPC1 to EPC11 is an elastomer resin composition (elastomer resin composition in which no antioxidant is added) consisting of a mixture of at least one type of thermoplastic elastomer (E) and at least one type of polypropylene-based polymer (P) obtained in a respective one of the examples and the comparative examples.

The unit of mixing amounts in Tables 1 and 2 is "pts.mass".

### (Manufacturing of Single-Layer Film (E-Ex) made of Elastomer Resin Composition)

In each of Examples E1 to E5 and Comparative Examples EC1 to EC11, pellets (E-P) of the obtained elastomer resin composition were melted and kneaded at 230°C by using a 20 mmφ single-screw extruder (manufactured by OCS), and extruded from a T-die having a width of 150 mm. The resin composition extruded in the molten state was cooled by inserting it between first and second cooling rolls adjacent to each other, winding it around the second cooling roll, inserting it between second and third cooling rolls, and winding it around the third cooling roll. The film obtained after the cooling was collected by a pair of take-off rolls. In this way, a single-layer film (E-Ex) made of the elastomer resin composition and having a width of 120 mm and a thickness of 150 µm was manufactured.

### (Manufacturing of Laminated Film (E-PP) containing Elastomer Resin Composition Layer and Polypropylene Layer)

In each of Examples E1 to E5 and Comparative Examples EC1 to EC11, a single-layer film (E-HP) made of the elastomer resin composition was obtained by compressing and molding the obtained elastomer resin composition pellets (E-P) by using a compression molding machine at 200°C under a load of 50kgf/cm² for 2 minutes.

A polyimide film ("Kapton (Registered Trademark) film" manufactured by Du Pont-Toray Co., Ltd. (75 mm in length, 150 mm in width, and 0.05 mm in thickness) and a nonpolar polypropylene film (PP-F) (150 mm in length, 150 mm in width, and 0.4 mm in thickness) were successively laminated on the single-layer film (E-HP) made of the elastomer resin composition (150 mm in length, 150 mm in width, and 0.5 mm in thickness). Note that the central axes of these films were aligned with each other.

A metal frame having an inner size of 150 mm × 150 mm and a thickness of 0.8 mm was prepared as a spacer. The obtained temporarily-laminated film was fitted into this metal frame, sandwiched between a pair of polytetrafluoroethylene (PTFE) films (release films), and further sandwiched between a pair of metal plates from the outside. The obtained temporary laminate was heated and pressurized by using a compression molding machine at 200°C under a load of 50kgf/cm² for 2 minutes, and then, the pair of metal plates, the pair of PTFE films, and the metal frame were removed.

Through the above-described series of processes, a laminated film (E-PP) (150 mm in length and 150 mm in width) having a laminated structure of "elastomer resin composition layer (0.5 mm in thickness)/polyimide layer (0.05 mm in thickness)/polypropylene (PP) layer (0.4 mm in thickness)" was obtained.

### (Manufacturing of Laminated Film (E-M) containing Elastomer Resin Composition Layer and Methacrylic Resin Composition Layer)

A single-layer film (M-HP) made of the methacrylic resin composition (MR1) was obtained by compressing and molding pellets of the methacrylic resin composition (MR1) in a manner similar to that of the single-layer film (E-HP) made of the elastomer resin composition.

In each of Examples E1 to E5 and Comparative Examples EC1 to EC11, a laminated film (E-M) (150 mm in length and 150 mm in width) having a laminated structure of "elastomer resin composition layer (0.5 mm in thickness)/polyimide layer (0.05 mm in thickness)/methacrylic resin composition layer (0.4 mm in thickness)" was obtained in a manner similar to that of the laminated film (E-PP), except that the single-layer film (M-HP) (150 mm in length, 150 mm in width, and 0.4 mm in thickness) made of the methacrylic resin composition (MR1) was used instead of the nonpolar polypropylene film (PP-F).

### (Manufacturing of Film Containing Decorative Layer (Film Containing Metal Layer) (M-In))

In each of Examples E1 to E5 and Comparative Examples EC1 to EC11, pellets of the methacrylic resin composition (MR1) were melted and kneaded at 260°C by using a single screw extruder with a 50 mmφ vent, and extruded from a T die having a width of 500 mm. The resin extruded in the molten state was cooled by inserting it between first and second cooling rolls adjacent to each other, winding it around the second cooling roll, inserting it between second and third cooling rolls, and winding it around the third cooling roll. The film obtained after the cooling was collected by a pair of take-off rolls. In this way, a single-layer film (M-Ex) made of the methacrylic resin composition (MR1) and having a width of 500 mm and a thickness of 75 µm was manufactured.

By using a vacuum deposition apparatus ("VE-2030" manufactured by Vacuum Device, resistive heating type) and particles of indium having purity of 99.99% and a grain size of 1 mm, an indium layer having a thickness of 50 nm was vacuum deposited as a decorative layer (metal layer) on the entire area of one of the surfaces of the single-layer film (M-Ex) made of the methacrylic resin composition (MR1). A basket heater (alumina 92%) was used for the resistive heating. The conditions for the vapor deposition were a vacuum level of 7×10⁻³ Pa, a speed of 0.8 Å/sec, and a deposition time of 10 minutes.

Through the above-described series of processes, a film containing a decorative layer (film containing a metal layer) (M-In) and having a laminated structure consisting of a methacrylic resin composition layer (which serves as both base-material layer and protective layer) (75 µm in thickness) and an indium layer (decorative layer, metal layer) (50 nm in thickness) was obtained (see Fig. 2).

### (Manufacturing of Decorative Film)

In each of Examples E1 to E5 and Comparative Examples EC1 to EC11, each of the obtained elastomer resin composition pellets (E-P), the pellets of the methacrylic resin composition (MR2), and the obtained elastomer resin composition pellets (E-P) were melted and kneaded by using a single screw extruder ("VGM 25-28EX" manufactured by G.M. ENGINEERING). These resins in the molten state were laminated inside a multi-manifold die, and a thermoplastic resin laminate having a three-layer structure was co-extruded from a T-die at 240°C and at a flow rate of 5 kg/h. This thermoplastic resin laminate was cooled by inserting it between first and second cooling rolls adjacent to each other, winding it around the second cooling roll, inserting it between second and third cooling rolls, and winding it around the third cooling roll. The film obtained after the cooling was collected by a pair of take-off rolls.

Through the above-described series of processes, a laminated film (E-M-E) having a laminated structure consisting of a first elastomer resin composition layer (50 µm in thickness, serving as both viscous-adhesive layer and shock absorbing layer), a methacrylic resin composition layer (200 µm in thickness, base material layer), and a second elastomer resin composition layer (50 µm in thickness, serving as both viscous-adhesive layer and shock absorbing layer), and having a width of 300 mm and a total thickness of 300 µm was obtained (see Fig. 1.).

Note that the first elastomer resin composition layer and the second elastomer resin composition layer have the same composition and the same thickness, and hence are not particularly distinguished from each other, so that both of them can function as a viscous-adhesive layer and a shock absorbing layer.

Next, the laminated film (E-M-E) (100 mm in length, 40 mm in width, and 300 µm in thickness) and the film containing a decorative layer (film containing a metal layer) (M-In) (100 mm in length, 40 mm in width, and about 75 µm in thickness) were thermocompression-bonded to each other by a pair of heating rolls of which the temperature was set to 110°C by using a thermal lamination apparatus ("VAII-700" manufactured by Taisei Laminator Co., Ltd.). Note that the thermocompression bonding was performed so that the second elastomer resin composition layer (serving as both viscous-adhesive layer and shock absorbing layer) contained in the laminated film (E-ME) and the indium layer (decorative layer, metal layer) contained in the film containing the decorative layer (film containing the metal layer) (M-In) were brought into contact with each other.

Through the above-described series of processes, a decorative film (DF1) (100 mm in length and 40 mm in width) having a laminated structure of "methacrylic resin composition layer (serving as both base-material layer and protective layer)/indium layer (decorative layer, metal layer)/second elastomer resin composition layer (serving as both viscous-adhesive layer and shock absorbing layer)/methacrylic resin composition layer/first elastomer resin composition layer (serving as both viscous-adhesive layer and shock absorbing layer)" was obtained (see Fig. 3.).

Further, a decorative film (DF2) having a laminated structure of "methacrylic resin composition layer (serving as both base-material layer and protective layer)/indium layer (decorative layer, metal layer)/polyimide layer/second elastomer resin composition layer (serving as both viscous-adhesive layer and shock absorbing layer)/methacrylic resin composition layer/first elastomer resin composition layer (serving as both viscous-adhesive layer and shock absorbing layer)" was obtained by disposing a polyimide film ("Kapton (Registered Trademark) film" manufactured by Du Pont-Toray Co., Ltd., 30 mm in length, 40 mm in width, and 0.05 mm in thickness) between the laminated film (E-M-E) (100 mm in length, 40 mm in width, and 300 µm in thickness) and the film including the decorative layer (film including the metal layer) (M-In) (100 mm in length, 40 mm in width, and about 75 µm in thickness), and performing thermocompression bonding in a manner similar to the method described above. Note that the central axes of these films were aligned with each other. This decorative film was a film for measuring the adhesive strength.

### (Manufacturing of Decorated Molded Article)

By using a vacuum molding machine (NGF-0406-T manufactured by Fu-se Vacuum Forming), a decorated molded article (DM) was obtained by performing three-dimensional surface decoration molding in which one of the surfaces of an adherend (PP-M) was covered by the decorative film (DF1) by a known method. The vacuum level was set to 0.5 kPa, and the heating temperature of the decorative film (DF1) was set to 130°C. Molding was performed so that the adherend (PP-M) and the first elastomer resin composition layer (serving as both viscous-adhesive layer and shock absorbing layer) contained in the decorative film (DF1) were brought into contact with each other. Note that the temperature of the decorative film (DF1) was measured by a radiation thermometer.

Through the above-described series of processes, a decorated molded article (DM) having a laminated structure of "methacrylic resin composition layer (serving as both base-material layer and protective layer)/indium layer (decorative layer, metal layer)/second elastomer resin composition layer (serving as both viscous-adhesive layer and shock absorbing layer)/methacrylic resin composition layer/first elastomer resin composition layer (serving as both viscous-adhesive layer and shock absorbing layer)/adherend" was obtained (see Fig. 4.).

### [Summary of Results]

The evaluation results are shown in Tables 1 and 2.

**[Table 1]**

| | | | Melt tension [N] or Melting point [°C] | Example | | | | |
|---|---|---|---|---|---|---|---|---|
| | | | | E1 | E2 | E3 | E4 | E5 |
| | | | | EP1 | EP2 | EP3 | EP4 | EP5 |
| Composition | Thermoplastic elastomer (E) | EX-1 | | 40.0 | 40.0 | 40.0 | 20.0 | 40.0 |
| | | EY-1 | | 40.0 | 40.0 | 40.0 | 60.0 | 40.0 |
| | | EZ-1 | | 20.0 | 20.0 | 20.0 | 20.0 | 20.0 |
| | Polypropylene polymer (PX) or (PXC) (containing no polar group) | PX-1 | 24.5×10⁻²N | 7.5 | | | 7.5 | |
| | | PX-2 | 4.9×10⁻²N | | 7.5 | 7.5 | | 7.5 |
| | | PXC-3 | 0.4×10⁻²N | | | | | |
| | Polypropylene polymer (PY ) or (PYC) (containing polar group) | PY-1 | 124°C | | | 10.0 | | |
| | | PY-2 | 123°C | 10.0 | | | 10.0 | |
| | | PY-3 | 115°C | | 10.0 | | | 15.0 |
| | | PYC-4 | 142°C | | | | | |
| | | PYC-5 | 135°C | | | | | |
| | | PYC-6 | 147°C | | | | | |
| Evaluation | Sliding property | | | ○ | ○ | ○ | ○ | ○ |
| | Film thickness stability | | | ○ | ○ | ○ | ○ | ○ |
| | Adhesive property to various materials (Adhesive strength [N]) | PP | | ○ (53 ) | ○ (27 ) | ○ (25 ) | ○ (37 ) | ○ (22 ) |
| | | Methacrylic resin | | ○ (64 ) | ○ (68 ) | ○ (65 ) | ○ (72 ) | ○ (56 ) |
| | | In | | ○ (19) | ○ (15 ) | ○ (13) | ○ (17) | ○ (20 ) |
| | Chipping resistance | | | ○ | ○ | ○ | ○ | ○ |

**[Table 2**

| | | | Melt tension [N] or Melting point [°C] | Comparative Example | | | | | | | | | | |
|---|---|---|---|---|---|---|---|---|---|---|---|---|---|---|
| | | | | EC1 | EC2 | EC3 | EC4 | EC5 | EC6 | EC7 | EC8 | EC9 | EC10 | EC11 |
| | | | | EPC1 | EPC2 | EPC3 | EPC4 | EPC5 | EPC6 | EPC7 | EPC8 | EPC9 | EPC10 | EPC11 |
| Composition | Thermoplastic elastomer (E) | EX-1 | | 45.0 | 50.0 | | 40.0 | 40.0 | 40.0 | 40.0 | 40.0 | 40.0 | 40.0 | 40.0 |
| | | EY-1 | | 45.0 | 50.0 | 40.0 | 40.0 | 40.0 | 40.0 | 40.0 | 40.0 | 40.0 | 40.0 | 40.0 |
| | | EZ-1 | | 10.0 | | 60.0 | 20.0 | 20.0 | 20.0 | 20.0 | 20.0 | 20.0 | 20.0 | 20.0 |
| | Polypropylene polymer (PX) or (PXC) (containing no polar group) | PX-1 | 24.5×10⁻²N | | 7.5 | 20.0 | | | | | 7.5 | | | |
| | | PX-2 | 4.9×10⁻²N | 7.5 | | | | | 2.5 | 7.5 | | 5.0 | 15.0 | 7.5 |
| | | PXC-3 | 0.4×10⁻²N | | | | | 7.5 | | | | | | |
| | Polypropylene polymer (PY ) or (PYC) (containing polar group) | PY-1 | 124°C | | | | | | | | | | | |
| | | PY-2 | 123°C | | 10.0 | 10.0 | | | | | | | | |
| | | PY-3 | 115°C | 10.0 | | | | 10.0 | | 5.0 | | | | |
| | | PYC-4 | 142°C | | | | | | | | 10.0 | | | |
| | | PYC-5 | 135°C | | | | | | 10.0 | | | 10.0 | 10.0 | |
| | | PYC-6 | 147°C | | | | 10.0 | | | | | | | 10.0 |
| Evaluation | Sliding property | | | ○ | × | ○ | × | × | ○ | ○ | ○ | ○ | ○ | ○ |
| | Film thickness stability | | | ○ | ○ | ○ | × | × | × | ○ | ○ | ○ | ○ | ○ |
| | Adhesive property to various materials (Adhesive strength [N]) | PP | | ○ (32) | ○ (22 ) | ○ (40 ) | ○ (29 ) | ○ (27 ) | ○ (20 ) | ○ (29 ) | × (11 ) | ○ (24 ) | ○ (35 ) | ○ (20 ) |
| | | Methacrylic resin | | × (44 ) | × (25 ) | ○ (74 ) | ○ (75 ) | ○ (53 ) | ○ (67) | ○ (69 ) | ○ (64 ) | ○ (70) | ○ (55 ) | ○ (58) |
| | | In | | ○ (12 ) | ○ (25 ) | × (6.8 ) | × (7.5 ) | ○ (22 ) | × (8.1 ) | × (7.7 ) | × (0.2 ) | × (9.2 ) | × (7.1) | × (0.4 ) |
| | Chipping resistance | | | ○ | ○ | × | ○ | ○ | ○ | ○ | ○ | ○ | ○ | ○ |

In each of Examples E1 to E5, the following elastomer resin composition was manufactured, i.e., an elastomer resin composition containing a first thermoplastic elastomer (EX), a second thermoplastic elastomer (EY), a third thermoplastic elastomer (EZ), a first polypropylene-based polymer (PX), and a second polypropylene-based polymer (PY), in which: based on the total amount of 100 pts.mass of thermoplastic elastomer (E), the content of the first thermoplastic elastomer (EX) is 15 to 55 pts.mass; the content of the second thermoplastic elastomer (EY) is 25 to 65 pts.mass, the content of the third thermoplastic elastomer (EZ) is 15 to 35 pts.mass; the content of the first polypropylene-based polymer (PX) is 3 to 15 pts.mass; and the content of the second polypropylene-based polymer (PY) is 7.5 to 20 pts.mass.

All of the elastomer resin compositions obtained in these examples had excellent tackiness, an excellent slipping property for metals, and an excellent process passing property.

All of the films obtained in these examples had excellent film thickness stability and an excellent film forming property.

All of the elastomer resin compositions obtained in these examples had an excellent adhesive property for various materials, and had an excellent adhesive property for nonpolar resins (such as nonpolar polypropylene), for polar resins (such as methacrylic resins), and for metals (such as indium).

A decorated molded article containing a resin layer made of one of the elastomer resin compositions obtained in these examples, and a decorative layer had excellent chipping resistance and was suitable for decorative uses such as for exterior members of vehicles.

In Comparative Example EC1, the content of the third thermoplastic elastomer (EZ) was less than 15 pts.mass based on the total amount of 100 pts.mass of thermoplastic elastomer (E). The elastomer resin composition obtained in this comparative example had a poor adhesive property for polar resins (such as methacrylic resins).

In Comparative Example EC2, the third thermoplastic elastomer (EZ) was not used. The elastomer resin composition obtained in this comparative example had high tackiness, a poor sliding property for metals, and a poor process passing property. Further, it had a poor adhesive property for polar resins (such as methacrylic resins).

In Comparative Example EC3, the first thermoplastic elastomer (EX) was not used, and based on the total amount of 100 pts.mass of thermoplastic elastomer (E), the content of the third thermoplastic elastomer (EZ) was more than 35 pts.mass and the content of the first polypropylene-based polymer (PX) was more than 15 pts.mass. The elastomer resin composition obtained in this comparative example had a poor adhesive property for metals (such as In) and poor chipping resistance.

In Comparative Example EC4, the first polypropylene-based polymer (PX) was not used. The elastomer resin composition obtained in this comparative example had high tackiness, a poor sliding property for metals, and a poor process passing property. Further, the film thickness stability was poor, and the film forming property was poor. Further, the adhesive property for metals (such as In) was poor.

In Comparative Example EC5, the polypropylene-based polymer (PXC) for comparison, having a melt tension smaller than 2.5×10⁻² N measured at 230°C and at a haul-off speed of 4.0 m/min was used instead of the first polypropylene-based polymer (PX). The elastomer resin composition obtained in this comparative example had high tackiness, a poor sliding property for metals, and a poor process passing property. Further, the film thickness stability was poor, and the film forming property was poor.

In Comparative Example EC6, the content of the first polypropylene-based polymer (PX) based on the total amount of 100 pts.mass of thermoplastic elastomer (E) was less than 3 pts.mass, and a polypropylene-based polymer (PYC) for comparison, having a melting point higher than 130°C was used instead of the second polypropylene-based polymer (PY). The elastomer resin composition obtained in this comparative example had poor film thickness stability and a poor film forming property. Further, the adhesive property for metals (such as In) was poor.

In Comparative Example EC7, the content of the second polypropylene-based polymer (PY) based on the total amount of 100 pts.mass of thermoplastic elastomer (E) was less than 7.5 pts.mass. The elastomer resin composition obtained in this comparative example had a poor adhesive property for metals (such as In).

In each of Comparative Example EC8 to EC11, a polypropylene-based polymer (PYC) for comparison, having a melting point higher than 130°C was used instead of the second polypropylene-based polymer (PY). All of the elastomer resin compositions obtained in these comparative examples had a poor adhesive property for metals (such as In). The elastomer resin composition obtained in Comparative Example EC8 also had a poor adhesive property for nonpolar resins (such as nonpolar polypropylene).

None of the elastomer resin compositions obtained in Comparative Example EC1 to EC11 were suitable for decorative uses such as for exterior members of vehicles.

### [Examples E3-1 to E3-10]

In each of Examples E3-1 to E3-10, an elastomer resin composition in which an antioxidant was added was obtained by melting and kneading the elastomer resin composition (EP3) in which no antioxidant was added, obtained in Example E3 and at least one type of antioxidant (AO) at 230°C for 4 minutes by using a testing mixing-and-kneading machine ("Labo Plastomill" manufactured by Toyo Seiki Co., Ltd.).

The formulations and evaluation results of the examples are shown in Table 3. "> 45.0" in Table 3 means that the 5% weight loss time was longer than 45.0 minutes.

**[Table 3]**

| | | | Example | | | | | | | | | |
|---|---|---|---|---|---|---|---|---|---|---|---|---|
| | | | E3-1 | E3-2 | E3-3 | E3-4 | E3-5 | E3-6 | E3-7 | E3-8 | E3-9 | E3-10 |
| Resin composition (EP) | EP3 | pts. | 100 | 100 | 100 | 100 | 100 | 100 | 100 | 100 | 100 | 100 |
| Phenolic antioxidant (AO-F) | AO-F1 | pts. | 0.170 | 0.420 | 0.170 | 0.170 | 0.170 | 0.170 | 0.170 | 0.545 | 0.795 | 1.420 |
| | AO-F2 | pts. | 0.040 | 0.040 | 0.210 | 0.040 | 0.040 | 0.040 | 0.040 | 0.040 | 0.040 | 0.040 |
| Phosphorous antioxidant (AO-P) | AO-P1 | pts. | | | | 0.220 | | 0.660 | 1.100 | 0.330 | 0.550 | 1.100 |
| | AO-P2 | pts. | | | | | 0.150 | | | | | |
| Total amount of (AO-F) | | pts. | 0.210 | 0.460 | 0.380 | 0.210 | 0.210 | 0.210 | 0.210 | 0.585 | 0.835 | 1.460 |
| Total amount of (AO-P) | | pts. | 0 | 0 | 0 | 0.220 | 0.150 | 0.660 | 1.100 | 0.330 | 0.550 | 1.100 |
| 5% weight loss time at 240°C | | mm | 9.7 | 9.0 | 8.8 | 13.5 | 11.8 | 22.8 | 27.6 | 26.8 | 29.4 | >45.0 |

### [Summary of results]

In each of examples E3-1 to E3-3, at least one type of phenolic antioxidant (AO-F) was added in an amount of 0.10 to 5.00 pts.mass (the total amount in the case of a plurality of types) to the elastomer resin composition (EP3), which consisted of at least one type of thermoplastic elastomer (E), a first polypropylene-based polymer (PX), and a second polypropylene-based polymer (PY), and in which no antioxidant was added, without adding any phosphoric antioxidant (AO-P). The 5% weight loss times of elastomer resin compositions obtained in these examples were 8.8 to 9.7 minutes.

In each of Examples E3-4 to E3-10, at least one type of phenolic antioxidant (AO-F) was added in an amount of 0.10 to 5.00 pts.mass (the total amount in the case of a plurality of types) and at least one type of phosphoric antioxidant (AO-P) was also added in an amount of 0.01 to 5.00 pts.mass (the total amount in the case of a plurality of types) to the elastomer resin composition (EP3), which consisted of at least one type of thermoplastic elastomer (E), a first polypropylene-based polymer (PX), and a second polypropylene-based polymer (PY), and in which no antioxidant was added. The 5% weight loss times of all the elastomer resin compositions obtained in these examples were 10 minutes or longer, indicating that their thermal-decomposition resistance was high.

It is presumed that in these examples, by the synergistic effect of an appropriate amount of the phenolic antioxidant (AO-F) and an appropriate amount of the phosphoric antioxidant (AO-P), the thermal degradation and the thermal decomposition of the thermoplastic elastomer (E) and the polypropylene-based polymer (P) were effectively suppressed when they were kept in the heated-and-molten state.

The present invention is not limited to the above-described embodiments and examples, and they can be modified as appropriate without departing from the scope and spirit of the invention.

This application is based upon and claims the benefit of priorities from Japanese patent application No. 2023-120616, filed on July 25, 2023, and Japanese Patent Application No. 2024-018382, filed on February 9, 2024, the entire disclosures of which are incorporated herein in their entirety by reference.

## Claims

1. An elastomer resin composition containing a thermoplastic elastomer (E) and a polypropylene-based polymer (P), and satisfying below-shown Conditions 1 to 3,
(Condition 1) The thermoplastic elastomer (E) contains:
at least one type of first thermoplastic elastomer (EX) selected from the group consisting of a block copolymer and a hydrogenated product of the block copolymer, the block copolymer containing a polymer block (xa) containing a styrene unit, and a polymer block (xb) containing a conjugated diene compound unit, and a total amount of a 1,2-bond and a 3,4-bond of the conjugated diene compound unit being less than 40 mol%;
at least one type of second thermoplastic elastomer (EY) selected from the group consisting of a block copolymer and a hydrogenated product of the block copolymer, the block copolymer containing a polymer block (ya) containing a styrene unit, and a polymer block (yb) containing a conjugated diene compound unit, and a total amount of a 1,2-bond and a 3,4-bond of the conjugated diene compound unit being 40 mol% or more; and
at least one type of third thermoplastic elastomer (EZ) selected from the group consisting of a block copolymer and a hydrogenated product of the block copolymer, the block copolymer containing a polymer block (za) containing an α-methylstyrene unit and a polymer block (zb) containing a conjugated diene compound unit, and a total amount of a 1,2-bond and a 3,4-bond of the conjugated diene compound unit being 40 mol% or more,
(Condition 2) the polypropylene-based polymer (P) contains a first polypropylene-based polymer (PX) containing no polar group and having a melt tension of 2.5×10⁻² N or larger as measured at 230°C and at a haul-off speed of 4.0 m/min, and a second polypropylene-based polymer (PY) containing a polar group and having a melting point of 130°C or lower, and
(Condition 3) based on a total amount of 100 pts.mass of the thermoplastic elastomer (E), a content of the first thermoplastic elastomer (EX) is 15 to 55 pts.mass; a content of the second thermoplastic elastomer (EY) is 25 to 65 pts.mass; a content of the third thermoplastic elastomer (EZ) is 15 to 35 pts.mass; a content of the first polypropylene-based polymer (PX) is 3 to 15 pts.mass; and a content of the second polypropylene-based polymer (PY) is 7.5 to 20 pts.mass.

2. The elastomer resin composition according to claim 1, wherein a melt tension of the first polypropylene-based polymer (PX) measured at 230°C and at a haul-off speed of 4.0 m/min is 50×10⁻² N or smaller.

3. The elastomer resin composition according to claim 1, wherein a melting point of the second polypropylene-based polymer (PY) is 100°C or higher.

4. The elastomer resin composition according to claim 1, further containing a plurality of types of antioxidants (AO) including a phenolic antioxidant (AO-F) and a phosphoric antioxidant (AO-P), wherein
based on a total of 100 pts.mass of the thermoplastic elastomer (E) and the polypropylene-based polymer (P), a content of the phenolic antioxidant (AO-F) is 0.10 to 5.00 pts.mass, and a content of the phosphoric antioxidant (AO-P) is 0.01 to 5.00.

5. A film comprising a layer made of an elastomer resin composition according to claim 1.

6. The film according to claim 5, further comprising a (meth)acrylic resin-containing layer.

7. The film according to claim 6, wherein the (meth)acrylic resin-containing layer contains a (meth)acrylic resin, and at least one type of rubber component selected from the group consisting of acrylic rubber particles and an acrylic block copolymer.

8. The film according to claim 5 or 6, further comprising a metal layer.

9. The film according to claim 5 or 6, further comprising a decorative layer.

10. A laminate comprising a layer made of an elastomer resin composition according to claim 1.

11. A molded article comprising a layer or a member made of an elastomer resin composition according to claim 1.

12. The molded article according to claim 11, comprising, on at least a part of a surface of an adherend, a layer made of the elastomer resin composition and a metal layer in a successive manner.

13. The molded article according to claim 12, further comprising a (meth)acrylic resin-containing layer above the metal layer.

14. The molded article according to claim 11, comprising, on at least a part of a surface of an adherend, a layer made of the elastomer resin composition and a decorative layer in a successive manner.

15. The molded article according to claim 14, further comprising a (meth)acrylic resin-containing layer above the decorative layer.
